(19) **Europäisches Patentamt / European Patent Office / Office européen des brevets**

(11) **EP 4 152 664 B1**

(12) # EUROPEAN PATENT SPECIFICATION

(45) Date of publication and mention of the grant of the patent:
**22.01.2025 Bulletin 2025/04**

(21) Application number: **21854393.2**

(22) Date of filing: **23.04.2021**

(51) International Patent Classification (IPC):
*H04L 1/1829* (2023.01)   *H04L 5/00* (2006.01)
*H04W 72/25* (2023.01)

(52) Cooperative Patent Classification (CPC):
**H04L 5/0053; H04L 1/1848;** H04W 72/25

(86) International application number:
**PCT/CN2021/089186**

(87) International publication number:
**WO 2022/028006 (10.02.2022 Gazette 2022/06)**

(54) **SIDELINK WIRELESS COMMUNICATION METHOD AND APPARATUS**

VERFAHREN UND VORRICHTUNG ZUR DRAHTLOSEN SIDELINK-KOMMUNIKATION

PROCÉDÉ ET APPAREIL DE COMMUNICATION SANS FIL DE LIAISON LATÉRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2020 CN 202010767724**

(43) Date of publication of application:
**22.03.2023 Bulletin 2023/12**

(73) Proprietor: **Quectel Wireless Solutions Co., Ltd**
**Shanghai 201601 (CN)**

(72) Inventors:
• **LIU, Zheng**
  **Shanghai 201601 (CN)**
• **YANG, Zhongzhi**
  **Shanghai 201601 (CN)**

(74) Representative: **Murgitroyd & Company**
**Murgitroyd House**
**165-169 Scotland Street**
**Glasgow G5 8PL (GB)**

(56) References cited:
WO-A1-2020/062055    CN-A- 108 988 983
CN-A- 111 315 028    CN-A- 112 436 925
US-A1- 2020 169 907

• **INTEL CORPORATION: "Sidelink Resource Allocation Design for NR V2X Communication", 3GPP DRAFT; R1-1904296, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, 3 April 2019 (2019-04-03), Mobile Competence Centre ; 650, route des Lucioles ; F-06921 Sophia-Antipolis Cedex ; France**
**, pages 1 - 15, XP051707175**
• **LG ELECTRONICS INC. (RAPPORTEUR): "Summary of MAC open issues for NR sidelink", 3GPP DRAFT; R2-2003757, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Online; 20200420 - 20200430, 1 May 2020 (2020-05-01), Mobile Competence Centre ; 650, route des Lucioles ; F-06921 Sophia-Antipolis Cedex ; France**
**, XP051879213**

**Description**

TECHNICAL FIELD

The present application relates to a method and an apparatus in a wireless communications system, and in particular, to a method and an apparatus for supporting triggering of radio link failure by using HARQ feedback in sidelink wireless communication.

BACKGROUND

Hybrid Automatic Repeat Request (HARQ) is a common method in cellular networks. A sender sends data to a receiver, and the receiver feeds back Acknowledgement (ACK) or Negative-Acknowledgement (NACK) to the sender depending on whether the data is received correctly or not, which is used to instruct the sender to perform necessary data retransmission, to improve robustness of data transmission.

Radio Link Failure (RLF) is also a common method in cellular networks. User equipment monitors quality of a downlink radio link. When continuous low quality of a radio link is detected, a radio link failure process will be triggered for restoring wireless connection with a base station.

Application scenarios of a future wireless communications system are increasingly diversified, and different application scenarios impose different performance requirements on the system. To meet different performance requirements of various application scenarios, at the 3rd Generation Partnership Project (3GPP) Radio Access Network (RAN) #72 plenary meeting, the New Radio (NR) technology (or Fifth Generation (5G)) was decided to be studied, and at the 3GPP RAN #75 plenary meeting, a Work Item (WI) of NR was passed and standardization of NR was started. For rapidly developing Vehicle-to-Everything (V2X) service, 3GPP has also started standard formulation and research work under the NR framework. At the 3GPP RAN #83 plenary meeting, a WI of NR V2X DRX was decided to be started for performing standardization. Unlike LTE V2X, which mainly focuses on a broadcast service, NR V2X also introduces unicast and groupcast services in addition to the broadcast service, so as to support more abundant application scenarios.

In addition, US 2020/0169907 A1 discloses that a first node receives a first signaling, the first signaling being used for indicating a first reference power threshold; receives a second signaling, the second signaling being used for indicating a first power offset; and performs a first channel measurement to determine whether a first radio resource can be used for a radio signal transmission; if yes, a first radio signal is transmitted in the first radio resource; if not, the radio signal transmission is dropped in the first radio resource; a first power threshold is used for the first channel measurement; the first power threshold is related to the first reference power offset; a position of the first radio resource is used for determining whether the first power threshold is related to the first power offset.

SUMMARY

The invention is set out in the appended set of claims.

Through research, the inventors found that a HARQ feedback mechanism is introduced in unicast transmission of NR V2X. Transmit User Equipment (Tx UE) sends data, and receive user equipment (Rx UE) receives data. When HARQ is enabled, the Rx UE generates ACK/NACK depending on whether the data is decoded correctly. Specifically, if the data is decoded correctly, the ACK is generated; otherwise, the NACK is generated. Since only half-duplex transmission is supported in V2X, and transmission capability of UE is limited, it cannot be ensured that the Rx UE can send ACK/NACK feedback when there are simultaneous transmission and reception requirements or there are a plurality of transmission requirements. If the Tx UE fails to receive ACK/NACK feedback for many times, a radio link failure will be triggered on the Tx UE side.

In view of the foregoing problem, the present application discloses a solution. In the description of the present application, an NR V2X scenario is only used as a typical application scenario or example. The present application is also applicable to other scenarios (such as a relay network, a Device-to-Device (D2D) network, a cellular network, a scenario that supports half-duplex user equipment) other than NR V2X that face similar problems, and a technical effect similar to that in NR V2X scenario may also be achieved. In addition, using a unified solution for different scenarios (including but not limited to the NR V2X scenario, a downlink communication scenario, and the like) also helps to reduce hardware complexity and costs. In the case of no conflict, embodiments and features in the embodiments of a first node of the present application may be applied in any other node, and vice versa. In the case of no conflict, the embodiments and features in the embodiments of the present application may be arbitrarily combined with each other. In particular, for explanation of terminology, nouns, functions, and variables in the present application (unless otherwise specified), reference may be made to the definitions in 3GPP specification protocol TS36 series, TS38 series, and TS37 series.

The present application discloses a method for a first node used for wireless communication, including:

receiving first signaling and a first wireless signal, where the first signaling indicates a first priority;

determining, based on the first priority, whether to send second signaling; when it is determined to send the second signaling, sending the second signaling and updating a value of a first counter to an initial value; or when it is determined not to send the second signaling, abstaining from sending of the second signaling and updating the value of the first counter by 1; and when the first counter expires, in response to expiration of the first counter, sending a second wireless signal and updating the value of the first counter to the initial value, where

the first signaling includes configuration information of the first wireless signal, and the second signaling is used to indicate whether the first wireless signal is correctly decoded. A target receiver of the second wireless signal is the same as a sender of the first signaling.

In an embodiment, the present application is applicable to a scenario in which a radio link failure is supported to be triggered by not receiving HARQ feedback in a sidelink.

In an embodiment, the problem to be resolved in the present application is as follows: due to influence of half duplex and/or transmission capability of V2X UE, a data receive device is unable to transmit ACK/NACK feedback, and if a number of times that a data transmit device fails to receive the ACK/NACK feedback exceeds a target threshold, a radio link failure will be triggered on the data transmit device side.

In an embodiment, a solution of the present application includes that: the data receive device accumulates the number of times that ACK/NACK is unable to be fed back, when the accumulated number of times that ACK/NACK is unable to be fed back exceeds a first threshold, the data receive device sends a wireless signal to the data transmit device, and the wireless signal indicates that a reason why the data transmit device fails to receive ACK/NACK is that the data receive device is unable to send ACK/NACK feedback.

In an embodiment, a beneficial effect of the present application includes that: when the number of times that ACK/NACK is unable to be fed back accumulated by the data receive device reaches the first threshold, a wireless signal will be sent, which may effectively reduce a probability of triggering unnecessary radio link failures by the data transmit device.

An aspect of the present application includes that:
the second wireless signal is sent only when the first node does not send, between a time when the first counter expires and a time domain resource reserved for the second wireless signal, a wireless signal to the sender of the first signaling.

An aspect of the present application includes:

sending a third wireless signal; and in response to the behavior of sending the third wireless signal, updating the value of the first counter to the initial value, where
a target receiver of the third wireless signal is the same as the sender of the first signaling.

An aspect of the present application includes that:
the second wireless signal only includes first scheduling signaling, and the first scheduling signaling indicates an identity of the first node and an identity of the sender of the first signaling.

An aspect of the present application includes that:

the second wireless signal includes a second MAC PDU, and the second MAC PDU indicates a channel quality state of a first channel, where
the first channel connects the first node and the sender of the first signaling.

An aspect of the present application includes that:
the second wireless signal includes a keepalive message.

An aspect of the present application includes:

comparing the first priority and a second priority; and when the first priority is higher than the second priority, determining to send the second signaling; or when the first priority is lower than the second priority, determining to abstain from sending of the second signaling, where
the second priority indicates a priority of a fourth wireless signal.

The present application discloses a first node used for wireless communication, including:

a first receiving set, configured to receive first signaling and a first wireless signal, where the first signaling indicates a first priority;
a first transmitting set, configured to: determine, based on the first priority, whether to send second signaling; when it is determined to send the second signaling, send the second signaling and update a value of a first counter to an initial value; or when it is determined not to send the second signaling, abstain from sending of the second signaling and update the value of the first counter by 1; and when the first counter expires, in response to expiration of the first counter, send a second wireless signal and update the value of the first counter to the initial value, where the first signaling includes configuration information of the first wireless signal, and the second signaling is used to indicate whether the first wireless signal is correctly decoded. A target receiver of the second wireless signal is the same as a sender of the first signaling.

In an embodiment, the method in the present application has the following advantages:
The present application is applicable to a scenario in which a radio link failure is supported to be triggered by not receiving HARQ feedback in sidelink wireless transmission.

The problem of the present application is as follows: due to influence of half duplex and/or transmission capability of V2X UE, a data receive device is unable to transmit ACK/NACK feedback, and if a number of times that a data transmit device fails to receive the ACK/NACK feedback exceeds a target threshold, a radio link failure will be triggered on the data transmit device side.

According to the method in the present application, the data receive device accumulates the number of times that ACK/NACK is unable to be fed back, when the accumulated number of times that ACK/NACK is unable to be fed back exceeds a first threshold, the data receive device sends a wireless signal to the data transmit device, and the wireless signal indicates that a reason why the data transmit device fails to receive ACK/NACK is that the data receive device is unable to send ACK/NACK feedback.

According to the method in the present application, when the number of times that ACK/NACK is unable to be fed back accumulated by the data receive device reaches the first threshold, a wireless signal is sent, which may effectively reduce a probability of triggering unnecessary radio link failures by the data transmit device.

BRIEF DESCRIPTION OF THE DRAWINGS

Other features, objectives and advantages of the present application will become more apparent upon reading the detailed description of the non-restrictive embodiments with reference to the following drawings.

FIG. 1 is a flowchart of first signaling, a first wireless signal, a first priority, a first counter, second signaling, and a second wireless signal according to an embodiment of the present application.
FIG. 2 is a schematic diagram of a network architecture according to an embodiment of the present application.
FIG. 3 is a schematic diagram of a radio protocol architecture of each of a user plane and a control plane according to an embodiment of the present application.
FIG. 4 is a schematic diagram of hardware modules of a communications device according to an embodiment of the present application.
FIG. 5 is a flowchart of processing at a first node according to an embodiment of the present application.
FIG. 6 is a schematic flowchart of a first counter according to an embodiment of the present application.
FIG. 7 is a schematic flowchart of a second counter according to an embodiment of the present application.
FIG. 8 is a format diagram of a second MAC subPDU according to an embodiment of the present application.
FIG. 9 is a format diagram of a keepalive message according to an embodiment of the present application.
FIG. 10 is a structural diagram of a first node processing apparatus according to an embodiment of the present application.

DETAILED DESCRIPTION OF THE EMBODIMENTS

The technical solutions of the present application are further described in detail below with reference to the accompanying drawings. It should be noted that, in the case of no conflict, the embodiments of the present application and characteristics in the embodiments may be combined with each other.

Embodiment 1

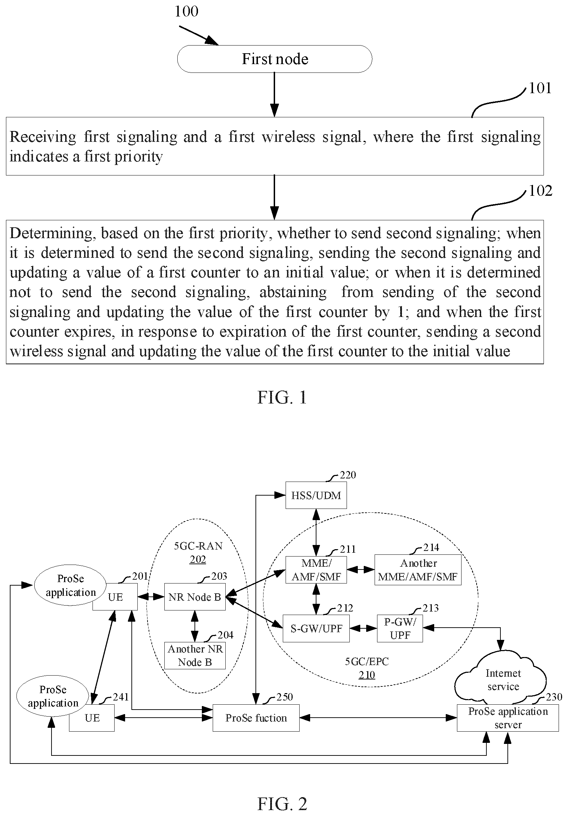

Embodiment 1 illustrates a flowchart of first signaling, a first wireless signal, a first priority, a first counter, second signaling, and a second wireless signal according to an embodiment of the present application, as shown in FIG. 1.

In Embodiment 1, a first node 100 in the present application, in Step 101, receives first signaling and a first wireless signal, where the first signaling indicates a first priority; in Step 102, determines, based on the first priority, whether to send second signaling; when it is determined to send the second signaling, sends the second signaling and updates a value of a first counter to an initial value; or when it is determined not to send the second signaling, abstains from sending of the second signaling and updates the value of the first counter by 1; and when the first counter expires, in response to expiration of the first counter, sends a second wireless signal and updates the value of the first counter to the initial value.

In an embodiment, a sender of the first signaling is a second node.

In an embodiment, the first signaling includes Sidelink Control Information (SCI).

In an embodiment, the first signaling is a Physical Sidelink Control Channel (PSCCH).

In an embodiment, the first signaling includes first-stage SCI (1st-stage-SCI) and second-stage SCI (2nd stage-SCI). The 1st-stage-SCI schedules the first wireless signal and the 2nd stage-SCI.

In an embodiment, the first signaling includes an SCI format 1-A and an SCI format 2, and the SCI format 2 includes an SCI format 2-A or an SCI format 2-B.

In an embodiment, the SCI format 1-A in the first signaling is transmitted through a PSCCH.

In an embodiment, the SCI format 1-A in the first signaling schedules the first wireless signal, and the SCI format 2-A or SCI format 2-B in the first signaling.

In an embodiment, the SCI format 2-A in the first signaling or the SCI format 2-B in the first signaling occupies a Physical Sidelink Shared Channel (PSSCH) resource.

In an embodiment, the SCI format 2-A in the first signaling or the SCI format 2-B in the first signaling is transmitted through a PSSCH.

In an embodiment, the first signaling is transmitted through an air interface.

In an embodiment, the first signaling is transmitted through a radio interface.

In an embodiment, the first signaling is transmitted through a PC5 interface.

In an embodiment, the first signaling is transmitted through a sidelink (SL).

In an embodiment, the first signaling is physical layer signaling.

In an embodiment, the first signaling is dynamic signaling.

In an embodiment, the first signaling is UE-specific.

In an embodiment, the first signaling is user equipment group-specific.

In an embodiment, the first signaling is sent through unicast.

In an embodiment, the first signaling is sent through groupcast.

In an embodiment, the first signaling includes a source identifier and a destination identifier.

In an embodiment, the source identifier included in the first signaling includes lower 8 bits of a link layer identifier of the second node.

In an embodiment, the destination identifier included in the first signaling includes lower 16 bits of a link layer identifier of the first node.

In an embodiment, the first wireless signal includes a source field and a destination field.

In an embodiment, the source field included in the first wireless signal includes upper 16 bits of the link layer identifier of the second node.

In an embodiment, the destination field included in the first wireless signal includes upper 8 bits of the link layer identifier of the first node.

In an embodiment, the link layer identifier is a Layer-2 identifier (ID).

In an embodiment, the link layer identifier indicates a node.

In an embodiment, the link layer identifier indicates one or more service types.

In an embodiment, the link layer identifier includes 24 bits.

In an embodiment, the first signaling includes a target threshold.

In an embodiment, the SCI format 2-A in the first signaling includes the target threshold.

In an embodiment, the first signaling includes the first priority.

In an embodiment, a ProSe per packet priority (PPPP) carried in the first signaling indicates the first priority.

In an embodiment, a value of the PPPP is a positive integer ranging from 0 to 7, indicating that a value of a priority is a positive integer ranging from 1 to 8.

In an embodiment, a smaller value of the PPPP indicates a higher priority.

In an embodiment, values of the priorities differ by 1, indicating that levels of the priorities differ by 1.

In an embodiment, the smaller a value of the first priority, the higher the first priority.

In an embodiment, the first priority indicates a priority of the first wireless signal.

In an embodiment, the first signaling includes configuration information of the first wireless signal.

In an embodiment, the configuration information is scheduling information.

In an embodiment, the configuration information includes a HARQ feedback enable bit, and the HARQ feedback enable bit indicates whether to perform HARQ ACK/NACK feedback.

In an embodiment, the configuration information includes a cast type, and the cast type indicates that the cast type is one of unicast, groupcast or broadcast.

In an embodiment, the configuration information includes time-frequency resources occupied by a scheduled wireless signal.

In an embodiment, the configuration information includes a modulation and coding mode of a scheduled wireless signal.

In an embodiment, the configuration information of the first wireless signal includes information required for decoding a first bit block.

In a sub-embodiment of the foregoing embodiment, the first priority indicates a priority of the first bit block.

In an embodiment, all or part of the first bit block is used to generate the first wireless signal.

In an embodiment, all or part of the first bit block is used together with a reference signal to generate the first wireless signal.

In an embodiment, all bits or some bits of the first bit block are sequentially subjected to CRC calculation, channel coding, rate matching, scrambling, modulation, layer mapping, antenna port mapping, mapping to virtual resource blocks, mapping from virtual to physical resource blocks, OFDM baseband signal generation, modulation and up conversion, to obtain the first wireless signal.

In an embodiment, all bits or some bits of the first bit block are used to generate a plurality of wireless signals, and the first wireless signal is one wireless signal of the plurality of wireless signals.

In an embodiment, a sender of the first wireless signal is the second node.

In an embodiment, the first wireless signal is PSSCH.

In an embodiment, the first wireless signal is transmitted through an air interface.

In an embodiment, the first wireless signal is transmitted through a radio interface.

In an embodiment, the first wireless signal is transmitted through a PC5 interface.

In an embodiment, the first wireless signal is transmitted through an SL.

In an embodiment, time-frequency resources occupied by the first signaling and the first wireless signal belong to a V2X resource pool.

In an embodiment, the time-frequency resources occupied by the first signaling and the first wireless signal are reserved for sidelink transmission.

In an embodiment, the first signaling and the first wireless signal are received in a same sidelink slot.

In an embodiment, a start time of the first signaling and a start time of the first wireless signal are in a same sidelink slot.

In an embodiment, the phrase determining, based on the first priority, whether to send second signaling includes: determining a third priority by jointly using the first priority and first information, and determining, based on the third priority, whether to send the second signaling.

In an embodiment, the first information is the cast type included in the first signaling.

In a sub-embodiment of the foregoing embodiment, when the cast type included in the first signaling is unicast, the third priority is one level higher than the first priority.

In a sub-embodiment of the foregoing embodiment, when the cast type included in the first signaling is groupcast, the third priority has a same level as the first priority.

In an embodiment, the first information is a size of the first bit block.

In a sub-embodiment of the foregoing embodiment, when a quantity of bits included in the first bit block is greater than a large data packet threshold, the third priority is one level higher than the first priority.

In a sub-embodiment of the foregoing embodiment, when the quantity of bits included in the first bit block is not greater than the large data packet threshold, the third priority has a same level as the first priority.

In an embodiment, the large data packet threshold is pre-configured.

In an embodiment, the large data packet threshold is pre-specified.

In an embodiment, the large data packet threshold is configured through Radio Resource Control (RRC) signaling.

In an embodiment, the large data packet threshold is determined by UE implemention.

In an embodiment, the first information is a value of the second signaling.

In a sub-embodiment of the foregoing embodiment, when the second signaling is ACK and the cast type included in the first signaling is unicast or type 2 groupcast, the third priority is one level higher than the first priority.

In a sub-embodiment of the foregoing embodiment, when the second signaling is NACK and the cast type included in the first signaling is unicast or type 2 groupcast, the third priority has a same level as the first priority.

In a sub-embodiment of the foregoing embodiment, when the second signaling is NACK and the cast type included in the first signaling is type 1 groupcast, the third priority is one level higher than the first priority.

In a sub-embodiment of the foregoing embodiment, when the second signaling is ACK and the cast type included in the first signaling is type 1 groupcast, the third priority has a same level as the first priority.

In an embodiment, the first information is an order of the first wireless signal in the plurality of wireless signals that are generated by the first bit block.

In a sub-embodiment of the foregoing embodiment, when the order of the first wireless signal in the plurality of wireless signals that are generated by the first bit block is the last one, the third priority is one level higher than the first priority.

In a sub-embodiment of the foregoing embodiment, when the order of the first wireless signal in the plurality of wireless signals that are generated by the first bit block is not the last one, the third priority has a same level as the first priority.

In an embodiment, the third priority indicates a priority of the second signaling.

In an embodiment, the third priority and the second priority are compared. When the third priority is higher than the second priority, it is determined to send the second signaling. When the third priority is lower than the second priority, it is determined to abstain from sending of the second signaling.

In an embodiment, when the third priority is equal to the second priority, whether to send the second signaling is determined by UE implemention.

In an embodiment, the second priority indicates a priority of a fourth wireless signal.

In an embodiment, a process for the first node to determine whether to send the second signaling by comparing the second priority and the third priority may use the method described in Section 16.2.4 of 3GPP 38.213 protocol.

In an embodiment, the first counter is used by the first node to count a quantity of times that HARQ feedback are not sent continuously. The HARQ feedback corresponds to a wireless signal sent by the sender of the first signaling; and Scheduling signaling corresponding to the wireless signal indicates that the HARQ feedback is enabled.

In an embodiment, the second signaling is transmitted through a Physical Sidelink Feedback Channel (PSFCH).

In an embodiment, the second signaling is piggybacked on the PSSCH for transmission.

In an embodiment, the second signaling is transmitted through a PC5 interface.

In an embodiment, the second signaling is transmitted through an SL.

In an embodiment, the second signaling is physical layer signaling.

In an embodiment, the second signaling is UE-specific.

In an embodiment, the second signaling is sent through unicast.

In an embodiment, a time-frequency resource occupied by the second signaling and a time-frequency resource occupied by the first signaling belong to a same V2X resource pool.

In an embodiment, the second signaling is one of ACK and NACK.

In an embodiment, channel decoding is performed on the first wireless signal based on configuration information of the first wireless signal included in the first signaling, and whether the channel decoding is correct is determined based on Cyclic Redundancy Check (CRC) verification.

In a sub-embodiment of the foregoing embodiment, if the CRC verification fails, it indicates that the first wireless signal is not correctly decoded; if the CRC verification is passed, it indicates that the first wireless signal is correctly decoded.

In an embodiment, when the first wireless signal is correctly decoded, the second signaling is ACK; when the first wireless signal is not correctly decoded, the second signaling is NACK.

In an embodiment, the first node determines a time domain resource, a frequency domain resource, and a code domain resource for sending the second signaling based on the method described in Section 16.3 of 3GPP 38.213 protocol, and sends the second signaling.

In an embodiment, the phrase abstaining from sending of the second signaling includes: the first node being in a receiving state.

In an embodiment, the phrase abstaining from sending of the second signaling includes: performing, by the first node, energy monitoring.

In an embodiment, the phrase abstaining from sending of the second signaling includes: detecting, by the first node, SCI and performing Reference Signal Received Power (RSRP) detection on a PSSCH scheduled based on the SCI.

In an embodiment, the phrase abstaining from sending of the second signaling includes: sending, by the first node, the fourth wireless signal.

In an embodiment, the phrase abstaining from sending of the second signaling includes: receiving, by the first node, the fourth wireless signal.

In an embodiment, the first counter is maintained at a higher layer of the first node, and any behavior of the sending of the second signaling and the abstaining from sending of the second signaling is used to instruct the higher layer of the first node to update the first counter.

In an embodiment, the updating the value of the first counter to the initial value includes: resetting the first counter.

In an embodiment, the updating the value of the first counter to the initial value includes: updating the value of the first counter to 0.

In an embodiment, updating the value of the first counter to the initial value includes: updating the value of the first counter to a first threshold.

In an embodiment, the first threshold is pre-configured.

In an embodiment, the first threshold is pre-specified.

In an embodiment, the first threshold is configured through RRC signaling.

In an embodiment, the first threshold is configured through PC5-RRC signaling.

In an embodiment, the first threshold is configured by a base station.

In an embodiment, the first threshold is included in all or some of Information Elements (IE) in one piece of RRC signaling.

In an embodiment, the first threshold is included in all or some of fields in an IE in one piece of RRC signaling.

In an embodiment, the first threshold is included in a System Information Block (SIB).

In an embodiment, the first threshold is determined by UE implementation.

In an embodiment, the first threshold is not greater than the target threshold.

In an embodiment, the first threshold is $\lceil \frac{2 \cdot Q}{3} \rceil$.

In an embodiment, the first threshold is $\lceil \frac{3 \cdot Q}{4} \rceil$.

In an embodiment, the first threshold is Q-1.

In an embodiment, the first threshold is Q-2.

In an embodiment, the first threshold is Q-3.

In an embodiment, Q is the target threshold, and $\lceil \cdot \rceil$ is the ceiling operation.

In an embodiment, the target threshold is used by the sender of the first signaling to trigger a radio link failure.

In an embodiment, the updating the value of the first counter by 1 includes incrementing the value of the first counter by 1.

In an embodiment, the updating the value of the first counter by 1 includes subtracting 1 from the value of the first counter.

In an embodiment, the phrase that the first counter expires includes: when the initial value of the first counter is 0, and the behavior of updating the first counter by 1 includes incrementing the value of the first counter by 1, the first counter expires when the value of the first counter reaches the first threshold.

In an embodiment, the phrase that the first counter expires includes: when the initial value of the first counter is the first threshold, and the behavior of updating the first counter by 1 includes subtracting 1 from the value of the first counter, the first counter expires when the value of the first counter reaches 0.

In an embodiment, when the first counter expires, in response to expiration of the first counter, the second wireless signal is sent and the value of the first counter is updated to the initial value.

In an embodiment, the first counter is maintained at the higher layer of the first node, and expiration of the first counter is used to instruct the physical layer of the first node to send the second wireless signal.

In an embodiment, the second wireless signal is transmitted through a radio interface.

In an embodiment, the second wireless signal is transmitted through a PC5 interface.

In an embodiment, the second wireless signal is transmitted through an SL.

In an embodiment, a time-frequency resource occupied by the second wireless signal belongs to a V2X resource pool.

In an embodiment, the time-frequency resource occupied by the second wireless signal is reserved for sidelink transmission.

In an embodiment, a target receiver of the second wireless signal is the same as the sender of the first signaling.

In an embodiment, the second wireless signal includes a second reference signal.

In an embodiment, the first node configures a time domain resource, a frequency domain resource, and a code domain resource for sending the second reference signal.

In an embodiment, a transmission occasion of the second reference signal is periodic, and in response to expiration of the first counter, the nearest transmission occasion of the second reference signal after the first counter expires is used to transmit the second reference signal.

In a sub-embodiment of the foregoing embodiment, the first node monitors the second reference signal at any transmission occasion of the second reference signal; when the second reference signal is detected, it is indicated that the first node has received the second wireless signal; otherwise, it is indicated that the first node has not received the second wireless signal.

Embodiment 2

Embodiment 2 illustrates a schematic diagram of a network architecture according to an embodiment of the present application, as shown in FIG. 2. FIG. 2 illustrates a V2X communications architecture in the NR 5G, Long-Term Evolution (LTE), and Long-Term Evolution Advanced (LTE-A) system architectures. The NR 5G or LTE or LTE-A network architecture may be referred to as a 5G System (5GS)/an Evolved Packet System (EPS) or another suitable term.

The V2X communications architecture in Embodiment 2 includes User Equipment (UE) 201, UE 241, a next generation radio access network (NG-RAN) 202, a 5G Core Network (5GC)/Evolved Packet Core (EPC) 210, a Home Subscriber Server (HSS)/Unified Data Management (UDM) 220, ProSe function 250, and a ProSe application server 230. The V2X communications architecture may interconnect with other access networks, but these entities/interfaces are not shown for simplicity. As shown in the figure, the V2X communications architecture provides a packet-switched service. However, those skilled in the art will readily understand that the various concepts presented throughout the present application may be extended to a network that provides a circuit-switched service or another cellular network. The NG-RAN includes an NR node B (gNB) 203 and another gNB 204. The gNB 203 provides termination of user plane and control plane protocol towards the UE 201. The gNB 203 may be connected to the another gNB 204 via an Xn interface (for example, a backhaul). The gNB 203 may also be referred to as a base station, a base transceiver station, a wireless base station, a wireless transceiver, a transceiver function, a basic service set (BSS), an extended service set (ESS), a transmission and reception point (TRP) or another suitable term. In an NTN network, the gNB 203 may be a satellite, an aircraft or a ground base station relayed by a satellite. The gNB 203 provides the UE 201 with an access point to the 5GC/EPC 210. Entities of the UE 201 include a cellular phone, a smart phone, a Session Initiation Protocol (SIP) phone, a laptop computer, a Personal Digital Assistant (PDA), a satellite radio, a global positioning system, a multimedia apparatus, a video apparatus, a digital audio player (such as an MP3 player), a camera, a game console, an unmanned air vehicle, an aircraft, a narrow band-internet of things device, a machine type communication device, a land vehicle, an automobile, an in-vehicle device, an in-vehicle communications unit, a wearable device, or any other similar functional apparatuses. The UE 201 may also be referred, by a person skilled in the art, to as a mobile station, a subscriber station, a mobile unit, a subscriber unit, a wireless unit, a remote unit, a mobile apparatus, a wireless apparatus, a wireless communications apparatus, a remote apparatus, a mobile subscriber station, an access terminal, a mobile terminal, a wireless terminal, a remote terminal, a handset, a user agent, a mobile client, a client or another suitable term. The gNB 203 is connected to the 5GC/EPC 210 via an S1/NG interface. The 5GC/EPC 210 includes a Mobility Management Entity (MME)/Authentication Management Field (AMF)/Session Management Function (SMF) 211, another MME/AMF/SMF 214, a Service Gateway (S-GW)/User Plane Function (UPF) 212, and a Packet Data Network Gateway (P-GW)/UPF 213. The MME/AMF/SMF 211 is a control node that handles signaling between the UE 201 and the 5GC/EPC 210. Generally, the MME/AMF/SMF 211 provides bearer and connection management. All user Internet Protocol (IP) packets are transmitted through the S-GW/UPF 212, and the S-GW/UPF 212 itself is connected to the P-GW/UPF 213. The P-GW provides UE IP address allocation and other functions. The P-GW/UPF 213 is connected to an Internet service. The Internet service includes an Internet protocol service corresponding to an operator, and may specifically include an Internet service, an Intranet service, an IP Multimedia Subsystem (IMS), and a Packet Switching (PS) streaming service. The ProSe function 250 is a logical function for network-related behaviors required by a Proximity-based Service (ProSe), including a Direct Provisioning Function (DPF), a Direct Discovery Name Management Function, an EPC-level Discovery ProSe Function, and the like. The ProSe application server 230 has functions such as storing an EPC ProSe user identifier, mapping between an application layer user identifier and an EPC ProSe user identifier, and allocating a ProSe-restricted code suffix pool.

In an embodiment, the UE 201 corresponds to the first node in the present application.

In an embodiment, the UE 241 corresponds to the second node in the present application.

In an embodiment, the UE 201 and the UE 241 each supports transmission in the SL.

In an embodiment, the UE 201 and the UE 241 each supports the PC5 interface.

In an embodiment, the UE 201 and the UE 241 each supports vehicle to everything.

In an embodiment, the UE 201 and the UE 241 each supports a V2X service.

In an embodiment, the UE 201 and the UE 241 each supports a D2D service.

In an embodiment, the UE 201 and the UE 241 each supports a public safety service.

In an embodiment, the gNB 203 supports vehicle to everything.

In an embodiment, the gNB 203 supports a V2X service.

In an embodiment, the gNB 203 supports a D2D service.

In an embodiment, the gNB 203 supports a public safety service.

In an embodiment, the gNB 203 is a macro cell base station.

In an embodiment, the gNB 203 is a micro cell base station.

In an embodiment, the gNB 203 is a pico cell base station.

In an embodiment, the gNB 203 is a Femtocell.

In an embodiment, the gNB 203 is a base station device that supports a large delay difference.

In an embodiment, the gNB 203 is a flight platform device.

In an embodiment, the gNB 203 is a satellite device.

In an embodiment, a radio link from the UE 201 to the gNB 203 is an uplink.

In an embodiment, a radio link from the gNB 203 to the UE 201 is a downlink.

In an embodiment, a radio link between the UE 201 and the UE 241 corresponds to the sidelink in the present application.

In an embodiment, the UE 201 and the gNB 203 are connected through a Uu interface.

In an embodiment, the UE 201 and the UE 241 are connected through a PC5 reference point.

In an embodiment, the ProSe function 250 is connected to each of the UE 201 and the UE 241 through a PC3 reference point.

In an embodiment, the ProSe function 250 is connected to the ProSe application server 230 through a PC2 reference point.

In an embodiment, the ProSe application server 230 is connected to each of a ProSe application of the UE 201 and a ProSe application of the UE 241 through a PC1 reference point.

Embodiment 3

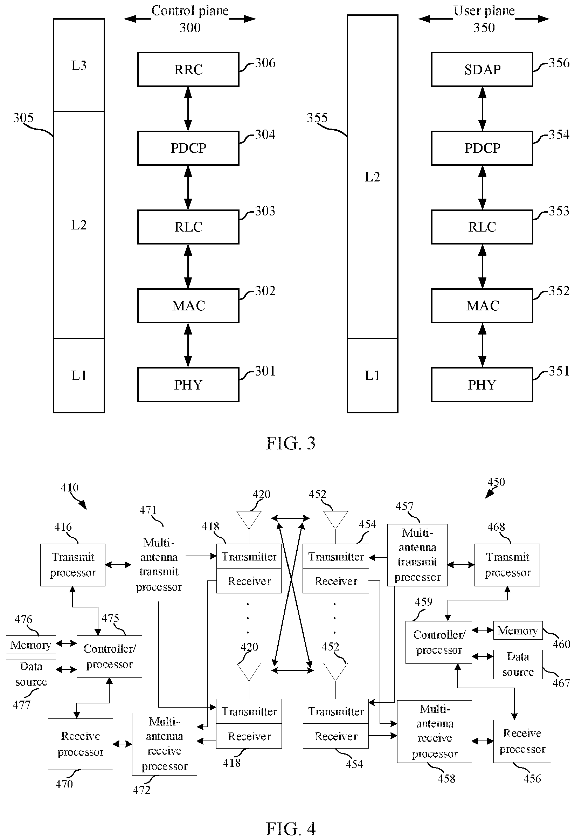

Embodiment 3 illustrates a schematic diagram of a radio protocol architecture of each of a user plane and a control plane according to an embodiment of the present application, as shown in FIG. 3. FIG. 3 is a schematic diagram illustrating an embodiment of a radio protocol architecture for each of a user plane 350 and a control plane 300. FIG. 3 shows the radio protocol architecture of the control plane 300 of UE and a gNB, where the radio protocol architecture includes three layers: layer 1, layer 2, and layer 3. Layer 1 (L1 layer) is the lowest layer, and various physical layer (PHY) signal processing functions are implemented at this layer. The L1 layer is referred to as PHY 301 herein. Layer 2 (L2 layer) 305 is above the PHY 301 and is responsible for a link between the UE and the gNB through the PHY 301. The L2 layer 305 includes a Medium Access Control (MAC) sublayer 302, a Radio Link Control (RLC) sublayer 303, and a Packet Data Convergence Protocol (PDCP) sublayer 304, and these sublayers are terminated at the gNB on a network side. The PDCP sublayer 304 provides data encryption and integrity protection, and the PDCP sublayer 304 further provides handoff support for UE between gNBs. The RLC sublayer 303 provides segmentation and reassembly of data packets, and implements retransmission of a lost data packet through an ARQ. The RLC sublayer 303 further provides detection of a duplicate data packet and protocol error detection. The MAC sublayer 302 provides mapping between a logical channel and a transport channel and multiplexing of a logical channel identity. The MAC sublayer 302 is further responsible for allocating various radio resources (such as a resource block) in a cell between UEs. The MAC sublayer 302 is further responsible for Hybrid Automatic Repeat Request (HARQ) operation. A Radio Resource Control (RRC) sublayer 306 in layer 3 (L3 layer) in the control plane 300 is responsible for obtaining a radio resource (namely, a radio bearer) and configuring a lower layer by using RRC signaling between a gNB and UE. Although not shown in the figure, a V2X layer may also exist above the RRC sublayer 306 in the control plane 300 of the UE. The V2X layer is responsible for generating a PC5 QoS parameter group and a QoS rule based on received service data or a received service request, generating, corresponding to the PC5 QoS parameter group, a PC5 QoS flow, and sending a QoS flow identifier and the corresponding PC5 QoS parameter group to an Access Stratum (AS) layer for the AS layer to perform QoS processing on a data packet belonging to the PC5 QoS flow identifier. The V2X layer further includes a PC5-Signaling (PC5-S) Protocol sublayer, and the V2X layer is responsible for indicating whether each transmission at the AS layer is PC5-S transmission or V2X service data transmission. The wireless protocol architecture of the user plane 350 includes layer 1 (L1 layer) and layer 2 (L2 layer). A PHY layer 351, a PDCP sublayer 354 in the L2 layer 355, an RLC sublayer 353 in the L2 layer 355, and a MAC sublayer 352 in the L2 layer 355 of the wireless protocol architecture of the user plane 350 are substantially the same as the corresponding layers and sublayers in the control plane 300, but the PDCP sublayer 354 further provides header compression for an upper-layer packet to reduce wireless transmission overheads. The L2 layer 355 in the user plane 350 further includes a Service Data Adaptation Protocol (SDAP) sublayer 356, and the SDAP sublayer 356 is responsible for mapping between Quality of Service (QoS) flows and data radio bearers (DRB), to support diversity of a service. The radio protocol architecture of the UE in the user plane 350 may include some or all of protocol sublayers of the SDAP sublayer 356, the PDCP sublayer 354, the RLC sublayer 353, and the MAC sublayer 352 at the L2 layer. Although not shown in the figure, the UE may further have several upper layers above the L2 layer 355, including a network layer (for example, an IP layer) terminating at the P-GW on the network side and an application layer terminating at the other end of connection (for example, a remote UE, a server, and the like).

In an embodiment, the radio protocol architectures in FIG. 3 are applicable to the first node in the present application.

In an embodiment, the radio protocol architectures in FIG. 3 are applicable to the second node in the present application.

In an embodiment, the first signaling in the present application is generated at the PHY 301 or the PHY 351.

In an embodiment, the first wireless signal in the present application is generated at the PHY 301 or the PHY 351.

In an embodiment, the second signaling in the present application is generated at the PHY 301 or the PHY 351.

In an embodiment, the second wireless signal in the present application is generated at the PHY 301 or the PHY 351.

In an embodiment, the third wireless signal in the present application is generated at the PHY 301 or the PHY 351.

In an embodiment, the first scheduling signaling in the present application is generated at the PHY 301 or the PHY 351.

In an embodiment, the second MAC PDU in the present application is generated at the MAC 302 or the MAC 352.

In an embodiment, the first counter in the present application is maintained at the PHY 301 or the PHY 351.

In an embodiment, the first counter in the present application is maintained at the MAC 302 or the MAC 352.

In an embodiment, the L2 layer 305 belongs to a higher layer.

In an embodiment, the RRC sublayer 306 in the L3 layer belongs to a higher layer.

In an embodiment, the V2X layer belongs to an upper layer.

In an embodiment, the PC5-S in the V2X layer belongs to an upper layer.

Embodiment 4

Embodiment 4 illustrates a schematic diagram of hardware modules of a communications device according to an embodiment of the present application, as shown in FIG. 4. FIG. 4 is a block diagram of a first communications device 450 and a second communications device 410 communicating with each other in an access network.

The first communications device 450 includes a controller/processor 459, a memory 460, a data source 467, a transmit processor 468, a receive processor 456, a multi-antenna transmit processor 457, a multi-antenna receive processor 458, transmitters/receivers 454, and antennas 452.

The second communications device 410 includes a controller/processor 475, a memory 476, a data source 477, a receive processor 470, a transmit processor 416, a multi-antenna receive processor 472, a multi-antenna transmit processor 471, transmitters/receivers 418 and antennas 420.

In transmission from the second communications device 410 to the first communications device 450, at the second communications device 410, an upper-layer data packet from a core network or an upper-layer data packet from the data source 477 is provided to the controller/processor 475. The core network and the data source 477 represent all protocol layers above the L2 layer. The controller/processor 475 implements functionality of the L2 layer. In the transmission from the second communications device 410 to the first communications device 450, the controller/processor 475 provides header compression, encryption, packet segmentation and reordering, multiplexing between a logical channel and a transport channel, and allocation to radio resources of the first communications device 450 based on various priority measurements. The controller/processor 475 is further responsible for retransmission of a lost packet, and signaling to the first communications device 450. The transmit processor 416 and the multi-antenna transmit processor 471 implement various signal processing functions for the L1 layer (namely, the physical layer). The transmit processor 416 implements encoding and interleaving to facilitate forward error correction (FEC) at the second communications device 410, and mapping of signal clusters based on various modulation schemes (such as Binary Phase Shift Keying (BPSK), Quadrature Phase Shift Keying (QPSK), M-Phase Shift Keying (M-PSK), and M-Quadrature Amplitude Modulation (M-QAM)). The multi-antenna transmit processor 471 performs digital spatial precoding on an encoded and modulated symbol, including codebook-based precoding and non-codebook-based precoding, and beamforming processing, to generate one or more spatial streams. The transmit processor 416 then maps each spatial stream to a subcarrier, multiplexing with a reference signal (for example, a pilot) in time domain and/or frequency domain, and then uses an Inverse Fast Fourier Transform (IFFT) to generate a physical channel that carries a time-domain multi-carrier symbol stream. Then the multi-antenna transmit processor 471 performs an operation of analog precoding transmission/beamforming on the time-domain multi-carrier symbol stream. Each transmitter 418 converts a baseband multi-carrier symbol stream provided by the multi-antenna transmit processor 471 into a radio frequency stream, and then provides the radio frequency stream for different antennas 420.

In the transmission from the second communications device 410 to the first communications device 450, at the first communications device 450, each receiver 454 receives a signal through its corresponding antenna 452. Each receiver 454 recovers information modulated onto the radio frequency carrier and converts the radio frequency stream into a baseband multi-carrier symbol stream, and provides the baseband multi-carrier symbol stream for the receive processor 456. The receive processor 456 and the multi-antenna receive processor 458 implement various signal processing functions of the L1 layer. The multi-antenna receive processor 458 performs an operation of analog precoding receiving/beamforming on the baseband multi-carrier symbol stream from the receiver 454. The receive processor 456 uses a Fast Fourier Transform (FFT) to convert the baseband multi-carrier symbol stream obtained after the operation of analog precoding receiving/beamforming from time domain to frequency domain. In frequency domain, a physical layer data signal and a reference signal are demultiplexed by the receive processor 456. The reference signal is used for channel estimation, and the data signal is recovered after multi-antenna detection by the multi-antenna receive processor 458, to obtain any spatial stream that uses the first communications device 450 as a destination. Symbols on each spatial stream are demodulated and recovered in the receive processor 456, and a soft decision is generated. The receive processor 456 then decodes and de-interleaves the soft decision to recover upper-layer data and a control signal transmitted by the second communications device 410 on a physical channel. The upper-layer data and the control signal are then provided for the controller/processor 459. The controller/processor 459 implements functions of the L2 layer. The controller/processor 459 may be associated with a memory 460 that stores program codes and data. The memory 460 may be referred to as a computer-readable medium. In the transmission from the second communications device 410 to the first communications device 450, the controller/processor 459 provides demultiplexing between a transport channel and a logical channel, packet reassembly, decryption, header decompression, control signal processing, to recover an upper-layer data packet from the second communications device 410. The upper-layer packet is then provided for all protocol layers above the L2 layer, or various control signals may be provided for the L3 layer for processing by the L3 layer.

In transmission from the first communications device 450 to the second communications device 410, at the first communications device 450, an upper-layer data packet is provided for the controller/processor 459 by using the data source 467. The data source 467 represents all protocol layers above the L2 layer. Similar to the transmit function at the second communications device 410 described in the transmission from the second communications device 410 to the first communications device 450, the controller/processor 459 implements header compression, encryption, packet segmentation and reordering, and multiplexing between a logical channel and a transport channel, to implement L2 layer functions for a user plane and a control plane. The controller/processor 459 is further responsible for retransmission of a lost packet, and signaling to the second communications device 410. The transmit processor 468 performs modulation mapping and channel coding processing. The multi-antenna transmit processor 457 performs digital multi-antenna spatial precoding, including codebook-based precoding and non-codebook-based precoding, and beamforming processing. Then the transmit processor 468 modulates a generated spatial stream into a multi-carrier/single-carrier symbol stream, and the multi-carrier/single-carrier symbol stream is provided for different antennas 452 via the transmitters 454 after undergoing an analog precoding/beamforming operation in the multi-antenna transmit processor 457. Each transmitter 454 first converts a baseband symbol stream provided by the multi-antenna transmit processor 457 into a radio frequency symbol stream, which is then provided for an antenna 452.

In the transmission from the first communications device 450 to the second communications device 410, a function at the second communications device 410 is similar to the receive function at the first communications device 450 described in the transmission from the second communications device 410 to the first communications device 450. Each receiver 418 receives a radio frequency signal through its corresponding antenna 420, converts the received radio frequency signal into a baseband signal, and provides the baseband signal for the multi-antenna receive processor 472 and the receive processor 470. The receive processor 470 and the multi-antenna receive processor 472 jointly implement functions of the L1 layer. The controller/processor 475 implements functions of the L2 layer. The controller/processor 475 may be associated with the memory 476 that stores program codes and data. The memory 476 may be referred to as a computer-readable medium. In the transmission from the first communications device 450 to the second communications device 410, the controller/processor 475 provides demultiplexing between a transport channel and a logical channel, packet reassembly, decryption, header decompression, control signal processing, to recover an upper-layer data packet from the first communications device 450. The upper-layer data packet from the controller/processor 475 may be provided to a core network or all protocol layers above the L2 layer, or various control signals may be provided to the core network or the L3 layer for processing by the L3 layer.

In an embodiment, the first communications device 450 includes: at least one processor and at least one memory, where the at least one memory includes computer program code. The at least one memory and the computer program code are configured to be used together with the at least one processor. The first communications device 450 is at least configured to: receive first signaling and a first wireless signal, where the first signaling indicates a first priority; determine, based on the first priority, whether to send second signaling; when it is determined to send the second signaling, send the second signaling and update a value of a first counter to an initial value; or when it is determined not to send the second signaling, abstain from sending of the second signaling and update the value of the first counter by 1; and when the first counter expires, in response to expiration of the first counter, send a second wireless signal and update the value of the first counter to the initial value. The first signaling includes configuration information of the first wireless signal, and the second signaling is used to indicate whether the first wireless signal is correctly decoded. A target receiver of the second wireless signal is the same as a sender of the first signaling.

In an embodiment, the first communications device 450 includes: a memory for storing a computer-readable instruction program, where the computer-readable instruction program generates actions when being executed by at least one processor, and the actions include: receiving first signaling and a first wireless signal, where the first signaling indicates a first priority; determining, based on the first priority, whether to send second signaling; when it is determined to send the second signaling, sending the second signaling and updating a value of a first counter to an initial value; or when it is determined not to send the second signaling, abstaining from sending of the second signaling and updating the value of the first counter by 1; and when the first counter expires, in response to expiration of the first counter, sending a second wireless signal and updating the value of the first counter to the initial value. The first signaling includes configuration information of the first wireless signal, and the second signaling is used to indicate whether the first wireless signal is correctly decoded. A target receiver of the second wireless signal is the same as a sender of the first signaling.

In an embodiment, the first communications device 450 corresponds to the first node in the present application.

In an embodiment, the second communications device 410 corresponds to the second node in the present application.

In an embodiment, the first communications device 450 is UE.

In an embodiment, the first communications device 450 is user equipment supporting V2X.

In an embodiment, the first communications device 450 is user equipment supporting D2D.

In an embodiment, the first communications device 450 is an in-vehicle device.

In an embodiment, the first communications device 450 is an RSU.

In an embodiment, the second communications device 410 is UE.

In an embodiment, the second communications device 410 is user equipment supporting V2X.

In an embodiment, the second communications device 410 is user equipment supporting D2D.

In an embodiment, the second communications device 410 is an in-vehicle device.

In an embodiment, the second communications device 410 is an RSU device.

In an embodiment, the second communications device 410 is a base station.

In an embodiment, the antenna 452, the receiver 454, the multi-antenna receive processor 458, the receive processor 456, and the controller/processor 459 are configured to receive the first signaling in the present application.

In an embodiment, the antenna 420, the transmitter 418, the multi-antenna transmit processor 471, the transmit processor 416, and the controller/processor 475 are configured to transmit the first signaling in the present application.

In an embodiment, the antenna 452, the receiver 454, the multi-antenna receive processor 458, the receive processor 456, and the controller/processor 459 are configured to receive the first wireless signal in the present application.

In an embodiment, the antenna 420, the transmitter 418, the multi-antenna transmit processor 471, the transmit processor 416, and the controller/processor 475 are configured to transmit the first wireless signal in the present application.

In an embodiment, the antenna 420, the receiver 418, the multi-antenna receive processor 472, the receive processor 470, and the controller/processor 475 are configured to receive the second signaling in the present application.

In an embodiment, the antenna 452, the transmitter 454, the multi-antenna transmit processor 457, the transmit processor 468, and the controller/processor 459 are configured to transmit the second signaling in the present application.

In an embodiment, the antenna 420, the receiver 418, the multi-antenna receive processor 472, the receive processor 470, and the controller/processor 475 are configured to receive the second wireless signal in the present application.

In an embodiment, the antenna 452, the transmitter 454, the multi-antenna transmit processor 457, the transmit processor 468, and the controller/processor 459 are configured to transmit the second wireless signal in the present application.

In an embodiment, the antenna 420, the receiver 418, the multi-antenna receive processor 472, the receive processor 470, and the controller/processor 475 are configured to receive the third wireless signal in the present application.

In an embodiment, the antenna 452, the transmitter 454, the multi-antenna transmit processor 457, the transmit processor 468, and the controller/processor 459 are configured to transmit the third wireless signal in the present application.

Embodiment 5

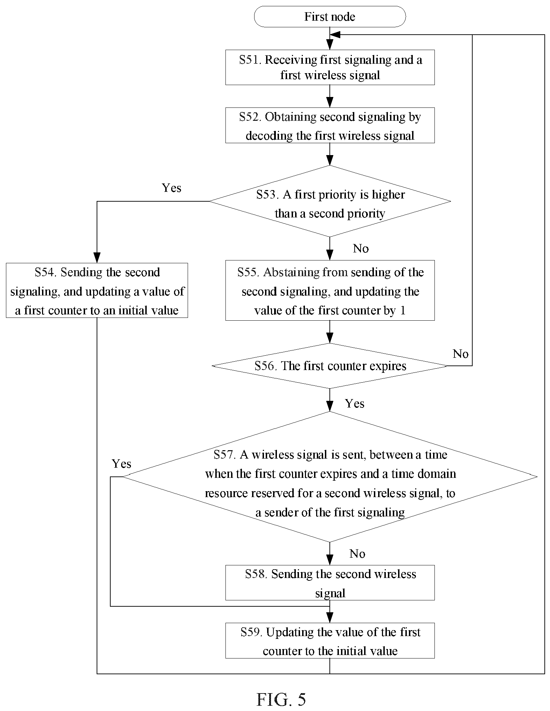

Embodiment 5 illustrates a flowchart of processing at a first node according to an embodiment of the present application, as shown in FIG. 5. The steps in FIG. 5 are performed at the first node.

In Step S51, first signaling and a first wireless signal are received. In Step S52, second signaling is obtained by decoding the first wireless signal. In Step S53, it is determined whether a first priority is higher than a second priority; and if yes, Step S54 is performed, and then back to Step S51; otherwise, Step S55 is performed. In Step S54, the second signaling is sent, and a value of a first counter is updated to an initial value. In Step S55, sending of the second signaling is abstained, and the value of the first counter is updated by 1. In Step S56, it is determined whether the first counter expires; and if yes, Step S57 is performed; otherwise, back to Step S51. In Step S57, it is determined whether a wireless signal is sent, between a time when the first counter expires and a time domain resource reserved for a second wireless signal, to a sender of the first signaling; and if yes, Step S59 is performed, and then back to Step S51; otherwise, Step S58 is performed. In Step S58, a second wireless signal is sent. In Step S59, the value of the first counter is updated to the initial value.

In an embodiment, the first node receives the first signaling and the first wireless signal, and generates the second signaling depending on whether the first wireless signal is correctly decoded.

In an embodiment, the first priority indicates a priority of the second signaling.

In an embodiment, the second priority indicates a priority of a fourth wireless signal.

In an embodiment, when the first priority is equal to the second priority, whether to send the second signaling is determined by UE implemention.

In an embodiment, the first priority and the second priority are compared. When the first priority is higher than the second priority, the first node determines to send the second signaling. When the first priority is lower than the second priority, the first node determines to abstain from sending of the second signaling.

In an embodiment, the abstaining from sending of the second signaling includes: sending the fourth wireless signal.

In an embodiment, the abstaining from sending of the second signaling includes: receiving the fourth wireless signal.

In an embodiment, the abstaining from sending of the second signaling includes: sending a fourth wireless signal set, where the fourth wireless signal set includes the fourth wireless signal; and the second signaling does not belong to the fourth wireless signal set.

In an embodiment, the abstaining from sending of the second signaling includes: receiving a fourth wireless signal set, where the fourth wireless signal set includes the fourth wireless signal.

In an embodiment, time domain resources occupied by the fourth wireless signal and time domain resources occupied by the second signaling at least partially overlap.

In an embodiment, time domain resources occupied by the fourth wireless signal and time domain resources occupied by the second signaling overlap by at least one multi-carrier symbol.

In an embodiment, time domain resources occupied by the fourth wireless signal and time domain resources occupied by the second signaling overlap by at least one multi-carrier symbol. The multi-carrier symbol includes a GAP symbol and an Automatic Gain Control (AGC) symbol that are before PSFCH of the second signaling and a GAP symbol after the PSFCH of the second signaling.

In an embodiment, the multi-carrier symbol includes an Orthogonal Frequency-Division Multiplexing (OFDM) symbol.

In an embodiment, frequency domain resources occupied by the fourth wireless signal and frequency domain resources occupied by the second signaling do not belong to a same Bandwidth Part (BWP).

In an embodiment, frequency domain resources occupied by the fourth wireless signal and frequency domain resources occupied by the second signaling do not belong to a same carrier.

In an embodiment, the fourth wireless signal and the second signaling use different radio access technologies.

In an embodiment, the fourth wireless signal uses Evolved Universal Terrestrial Radio Access (E-UTRA) radio access, and the second signaling uses NR radio access; or vice versa.

In an embodiment, a process for the first node to determine whether to send the second signaling by comparing the second priority and the first priority may use the method described in Section 16.2.4 of 3GPP 38.213 protocol.

In an embodiment, the fourth wireless signal includes PSFCH.

In an embodiment, the fourth wireless signal includes a Physical Downlink Control Channel (PDCCH).

In an embodiment, the fourth wireless signal includes a Physical Downlink Shared Channel (PDSCH).

In an embodiment, the fourth wireless signal includes a Physical Uplink Shared Channel (PUSCH).

In an embodiment, the fourth wireless signal includes a Physical Uplink Control Channel (PUCCH).

In an embodiment, the fourth wireless signal includes a PSSCH.

In an embodiment, the fourth wireless signal includes PSCCH.

In an embodiment, the fourth wireless signal includes a Primary Synchronization Signal/Secondary Synchronization Signal/Physical Sidelink Broadcast Channel (PSS/SSS/PSBCH).

In an embodiment, the fourth wireless signal includes a Sidelink-Primary Synchronization Signal/Sidelink-Secondary Synchronization Signal/Physical Sidelink Broadcast Channel (S-PSS/S-SSS/PSBCH).

In an embodiment, the fourth wireless signal is a wireless signal with the highest priority among a plurality of wireless signals waiting to be sent.

In an embodiment, the fourth wieless signal is a wireless signal with the highest priority among a plurality of wireless signals waiting to be received.

In an embodiment, the behavior of sending the fourth wireless signal set includes that the fourth wireless signal set includes K pieces of HARQ feedback, the first node sends the K pieces of HARQ feedback, and the fourth wireless signal is a HARQ feedback with the lowest priority among the K pieces of HARQ feedback; K is not greater than a product of M and a number of sub-channels included in a V2X resource pool where the first signaling is located; and M is a PSFCH resource period in the V2X resource pool where the first signaling is located, and M is one of 1, 2 or 4.

In an embodiment, the number of the sub-channels included in the V2X resource pool is determined by frequency domain resources of the V2X resource pool.

In an embodiment, the V2X resource pool includes L Physical Resource Blocks (PRBs), each sub-channel includes N PRBs, and the number of the sub-channels included in the V2X resource pool is $\lfloor \frac{L}{N} \rfloor$, where $\lfloor \cdot \rfloor$ represents a floor operation.

In an embodiment, the second wireless signal is sent when the first counter expires and only when no wireless signal is sent, between a time when the first counter expires and a time domain resource reserved for the second wireless signal, to the sender of the first signaling.

In an embodiment, the second wireless signal is abstained from sending when the first counter expires and a wireless signal is sent, between a time when the first counter expires and a time domain resource reserved for the second wireless signal, to the sender of the first signaling.

In an embodiment, when the first counter expires, a wireless signal is sent, between a time when the first counter expires and a time domain resource reserved for the second wireless signal, to the sender of the first signaling; and in response to sending, between a time when the first counter expires and a time domain resource reserved for the second wireless signal, the wireless signal to the sender of the first signaling, the value of the first counter is updated to the initial value.

In an embodiment, the first node obtains the time domain resource reserved for the second wireless signal by sensing.

In an embodiment, the first node obtains the time domain resource reserved for the second wireless signal through a time-frequency resource obtaining method of NR mode 2.

In an embodiment, the first node obtains the time domain resource reserved for the second wireless signal through a time-frequency resource obtaining method of LTE mode 4.

In an embodiment, the first node obtains the time domain resource reserved for the second wireless signal through the method described in Section 8.1.4 of 3GPP 38.214 protocol.

In an embodiment, the first node obtains the time domain resource reserved for the second wireless signal through the method described in Section 14.1.1.6 of 3GPP 36.213 protocol.

In an embodiment, the first node obtains the time domain resource reserved for the second wireless signal by a request to a serving base station of the first node.

In an embodiment, the sending, between a time when the first counter expires and a time domain resource reserved for the second wireless signal, the wireless signal to the sender of the first signaling includes: a PSFCH is sent, between a time when the first counter expires and a time domain resource reserved for the second wireless signal, to the sender of the first signaling.

In an embodiment, the sending, between a time when the first counter expires and a time domain resource reserved for the second wireless signal, the wireless signal to the sender of the first signaling includes: a PSSCH is sent, between a time when the first counter expires and a time domain resource reserved for the second wireless signal, to the sender of the first signaling.

In an embodiment, the sending, between a time when the first counter expires and a time domain resource reserved for the second wireless signal, the wireless signal to the sender of the first signaling includes: a PSCCH is sent, between a time when the first counter expires and a time domain resource reserved for the second wireless signal, to the sender of the first signaling.

In an embodiment, the phrase abstaining from sending of the second wireless signal includes: the first node being in a receiving state.

In an embodiment, the phrase abstaining from sending of the second wireless signal includes: performing, by the first node, energy monitoring.

In an embodiment, the phrase abstaining from sending of the second wireless signal includes: detecting, by the first node, SCI and performing Reference Signal Received Power (RSRP) detection for a PSSCH scheduled based on the SCI.

In an embodiment, the phrase abstaining from sending of the second wireless signal includes: sending, by the first node, a wireless signal other than the second wireless signal.

In an embodiment, the phrase abstaining from sending of the second wireless signal includes: releasing a time-frequency resource reserved for the second wireless signal.

In an embodiment, the first node sends the second wireless signal, and in response to sending the second wireless signal, the value of the first counter is updated to the initial value.

In an embodiment, the first counter is maintained at a higher layer of the first node, and the sending of the second wireless signal is used to instruct the higher layer of the first node to update the first counter.

In an embodiment, the second wireless signal includes only first scheduling signaling; and the first scheduling signaling is transmitted on the PSCCH.

In an embodiment, the first scheduling signaling includes an identity of the first node and an identity of the sender of the first signaling.

In an embodiment, the first scheduling signaling includes Sidelink Control Information (SCI).

In an embodiment, that the second wireless signal includes only first scheduling signaling includes: the second wireless signal including SCI-only information.

In an embodiment, the first scheduling signaling includes only a first-stage SCI, and the first-stage SCI includes the identity of the first node and the identity of the sender of the first signaling. The first-stage SCI is transmitted on a PSCCH.

In an embodiment, the first scheduling signaling includes a first-stage SCI (1st-stage-SCI) and a second-stage SCI (2nd stage-SCI), and the first-stage SCI indicates the second-stage SCI transmitted on a PSSCH. The second-stage SCI includes the identity of the first node and the identity of the sender of the first signaling. The first-stage SCI is transmitted on a PSCCH.

In an embodiment, the first scheduling signaling is transmitted through a radio interface.

In an embodiment, the first scheduling signaling is transmitted through a PC5 interface.

In an embodiment, the first scheduling signaling is transmitted through an SL.

In an embodiment, the first scheduling signaling is physical layer signaling.

In an embodiment, the first scheduling signaling is dynamic signaling.

In an embodiment, the first scheduling signaling is UE-specific.

In an embodiment, the first scheduling signaling is sent through unicast.

In an embodiment, the identity of the first node includes lower 8 bits of a link layer identifier of the first node.

In an embodiment, the identity of the first node includes lower 16 bits of the link layer identifier of the first node.

In an embodiment, the identity of the first node includes 24 bits of the link layer identifier of the first node.

In an embodiment, the identity of the sender of the first signaling includes lower 8 bits of a link layer identifier of the sender of the first signaling.

In an embodiment, the identity of the sender of the first signaling includes lower 16 bits of the link layer identifier of the sender of the first signaling.

In an embodiment, the identity of the sender of the first signaling includes 24 bits of the link layer identifier of the sender of the first signaling.

In a sub-embodiment of the foregoing embodiment, the first counter is maintained at the physical layer of the first node, and expiration of the first counter is used to instruct the higher layer of the first node to generate the second wireless signal.

In an embodiment, the first node sends second scheduling signaling and the second wireless signal, where the second scheduling signaling indicates configuration information of the second wireless signal.

In an embodiment, the second wireless signal includes a second Media Access Control (MAC) protocol data unit (PDU), and the second MAC PDU includes a second MAC subPDU.

In an embodiment, the second MAC subPDU includes only a second MAC subheader.

In a sub-embodiment of the foregoing embodiment, a value of the logical channel identity index included in the second MAC subheader is a positive integer between 20 and 61.

In an embodiment, the second MAC subPDU includes only the second MAC subheader and padding.

In a sub-embodiment of the foregoing embodiment, the logical channel identity index included in the second MAC subheader is 63.

In a sub-embodiment of the foregoing two embodiments, the second MAC PDU implicitly indicates a channel quality state of a first channel.

In an embodiment, the second MAC subPDU includes a second MAC Control Element (CE).

In an embodiment, the second MAC CE indicates the channel quality state of the first channel.

In an embodiment, a value of a logical channel identifier (LCID) index of the second MAC CE is a positive integer between 20 and 61.

In an embodiment, the channel quality state of the first channel includes a first threshold.

In an embodiment, the channel quality state of the first channel includes a DTX time interval, and the DTX time interval is a time interval between a reference slot and a transmission slot of the second wireless signal.

In an embodiment, the reference slot is a slot where the first counter expires.

In an embodiment, the reference slot is a slot where a value obtained before the first counter expires. When the initial value of the first counter is 0, and the behavior of updating the first counter by 1 includes incrementing the value of the first counter by 1, then the reference slot is a slot obtained when the value of the first counter reaches the first threshold value -1. When the initial value of the first counter is the first threshold, and the behavior of updating the first counter by 1 includes subtracting 1 from the value of the first counter, then the reference slot is a slot obtained when the value of the first counter reaches 1.

In an embodiment, the channel quality state of the first channel includes a first ratio, where the first ratio is a quotient obtained when a number of times that HARQ feedback is not performed in a second time interval is divided by a total number of times that HARQ feedback needs to be performed.

In an embodiment, the second time interval includes a time interval between a time when the first channel is established and a time when the first counter expires.

In an embodiment, the second time interval includes P slots, and an ending slot of the second time interval is a slot where the first counter expires. The P slots include P slots preceding the slot where the first counter expires.

In an embodiment, P is a positive integer not greater than 1100.

In an embodiment, P is 1000.

In an embodiment, P is 100.

In an embodiment, there is a list with T elements arranged in ascending order, namely R = [$r_1$, $r_2$, $r_3$, ..., $r_T$], where any $r_i$ in the list is a number between 0 and 1; T is a positive integer not greater than 256; and $1 \leq i \leq T$.

In an embodiment, the second MAC CE includes a first ratio index, the first ratio index indicates the first ratio, and the first ratio index is a positive integer not greater than T.

In an embodiment, when the first ratio is $r_i$, the first ratio index is i.

In an embodiment, when the first ratio is between [$r_i$, $r_j$], the first ratio index is i, and $r_i$ and $r_j$ are two adjacent elements in the list R.

In an embodiment, when the first ratio is between [$r_i$, $r_j$], the first ratio index is j, and $r_i$ and $r_j$ are two adjacent elements in the list R.

In an embodiment, the channel quality state of the first channel includes a sidelink Channel State Information (CSI) report of the first channel.

In an embodiment, the channel quality state of the first channel includes at least one of a Rank Indicator (RI), a Channel Quality Indicator (CQI), and a Precoding Matrix Indicator (PMI).

In an embodiment, the first channel connects the first node and the sender of the first signaling.

In an embodiment, the first channel is a physical layer link connecting the first node and the sender of the first signaling.

In an embodiment, the first channel is a radio link connecting the first node and the sender of the first signaling.

In an embodiment, the time when the first channel is established is a time when direct communication is established between the first node and the sender of the first signaling.

In an embodiment, the time when the first channel is established includes a time when the first node sends PC5-RRC signaling to the sender of the first signaling.

In an embodiment, the time when the first channel is established includes a time when the first node receives the PC5-RRC signaling sent by the sender of the first signaling.

In an embodiment, the PC5-RRC signaling includes RRCReconfigurationSidelink.

In an embodiment, the PC5-RRC signaling includes RRCReconfigurationCompleteSidelink.

In an embodiment, a keepalive message is generated at an upper layer of the first node.

In a sub-embodiment of the foregoing embodiment, the first counter is maintained at the higher layer of the first node, and expiration of the first counter is used to instruct the upper layer of the first node to generate the keepalive message.

In a sub-embodiment of the foregoing embodiment, the first counter is maintained at the physical layer of the first node, and expiration of the first counter is used to instruct the upper layer of the first node to generate the keepalive message.

In an embodiment, the keepalive message is transmitted in PC5-S signaling.

In an embodiment, the PC5-S signaling is generated at the V2X layer.

In an embodiment, in response to sending the keepalive message, the first node receives keepalive ACK.

Embodiment 6

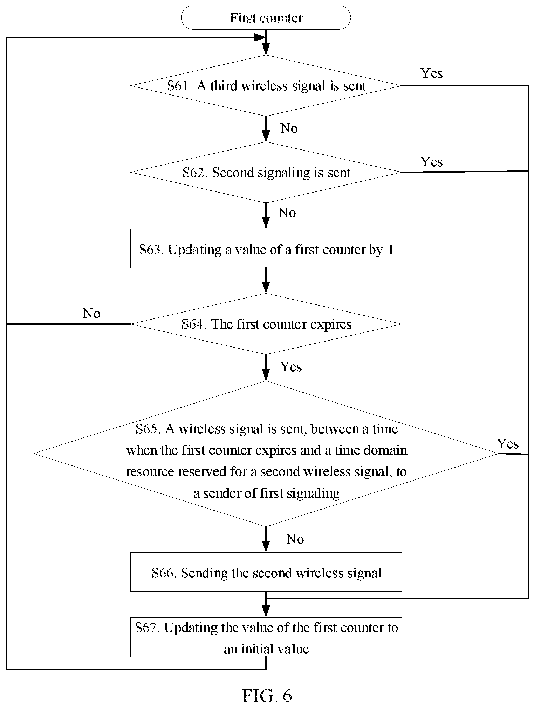

Embodiment 6 illustrates a flowchart of a first counter according to an embodiment of the present application, as shown in FIG. 6. The steps in FIG. 6 are performed at a first node.

In Step S61, it is determined whether a third wireless signal is sent; and if yes, Step S67 is performed, and then back to Step S61; otherwise, Step S62 is performed. In Step S62, it is determined whether second signaling is sent; and if yes, Step S67 is performed, and then back to Step S61; otherwise, Step S63 is performed. In Step S63, a value of a first counter is updated by 1. In Step S64, it is determined whether the first counter expires; and if yes, Step S65 is performed; otherwise back to Step S61. In Step S65, it is determined whether a wireless signal is sent, between a time when the first counter expires and a time domain resource reserved for a second wireless signal, to a sender of first signaling; and if yes, Step S67 is performed, and then back to Step S61; otherwise, Step S66 is performed. In Step S66, the second wireless signal is sent. In Step S67, the value of the first counter is updated to an initial value.

In an embodiment, the first counter is maintained at the first node.

In an embodiment, the first counter is maintained at the physical layer of the first node.

In an embodiment, the first counter is maintained at the higher layer of the first node.

In an embodiment, the value of the first counter is updated to the initial value during initialization.

In an embodiment, during initialization of the first counter includes a moment when the first node is powered on.

In an embodiment, during initialization of the first counter includes a moment when the first counter is configured.

In an embodiment, during initialization of the first counter includes a moment when an RRC connection is established between the second node and the first node.

In an embodiment, during initialization of the first counter includes a moment when unicast communication is established between the second node and the first node.

In an embodiment, during initialization of the first counter includes a moment when HARQ-enabled unicast communication is established between the second node and the first node.

In an embodiment, during initialization of the first counter includes a moment when the first node receives PC5-RRC information sent by the second node.

In an embodiment, the first node sends the third wireless signal, and in response to the behavior of sending the third wireless signal, the value of the first counter is updated to the initial value.

In an embodiment, a target receiver of the third wireless signal is the same as the sender of the first signaling.

In an embodiment, the third wireless signal includes a PSSCH.

In an embodiment, the third wireless signal includes a PSCCH.

In an embodiment, the third wireless signal is transmitted through an air interface.

In an embodiment, the third wireless signal is transmitted through a radio interface.

In an embodiment, the third wireless signal is transmitted through a PC5 interface.

In an embodiment, the third wireless signal is transmitted through an SL.

In an embodiment, a time-frequency resource occupied by the third wireless signal belongs to a V2X resource pool.

In an embodiment, the time-frequency resource occupied by the third wireless signal is reserved for sidelink transmission.

In an embodiment, the first node sends third scheduling signaling and the third wireless signal, where the third scheduling signaling indicates configuration information of the third wireless signal.

In an embodiment, the third scheduling signaling carries a part of bits of each of the link layer identifier of the second node and the link layer identifier of the first node, and the third wireless signal carries remaining bits of each of the link layer identifier of the second node and the link layer identifier of the first node.

In an embodiment, the third scheduling signaling includes a source identifier and a destination identifier.

In an embodiment, the phrase that a target receiver of the third wireless signal is the same as the sender of the first signaling includes that: the source identifier included in the third scheduling signaling includes lower 8 bits of the link layer identifier of the first node; and the destination identifier included in the third scheduling signaling includes lower 16 bits of the link layer identifier of the second node.

In an embodiment, the third wireless signal includes a source field and a destination field.

In an embodiment, the phrase that a target receiver of the third wireless signal is the same as the sender of the first signaling includes that: 8-bit source identifier included in the third scheduling signaling serves as lower 8 bits and 16-bit source field included in the third wireless signal serves as upper 16 bits to form a 24-bit source node link layer identifier, and the source node link layer identifier is the same as the 24 bits of the link layer identifier of the first node; and 16-bit destination identifier included in the third scheduling signaling serves as lower 16 bits and 8-bit destination field included in the third wireless signal serves as upper 8 bits to form a 24-bit destination node link layer identifier, and the destination node link layer identifier is the same as the 24 bits of the link layer identifier of the second node.

In an embodiment, the first node sends the third wireless signal, and the third wireless signal includes only fourth scheduling signaling.

In an embodiment, the fourth scheduling signaling includes SCI-only information.

In an embodiment, the phrase that a target receiver of the third wireless signal is the same as the sender of the first signaling includes that: the source identifier included in the fourth scheduling signaling includes the lower 8 bits of the link layer identifier of the first node; and the destination identifier included in the fourth scheduling signaling includes the lower 16 bits of the link layer identifier of the second node.

In an embodiment, the first node sends the second signaling, and in response to the behavior of sending the second signaling, the value of the first counter is updated to the initial value.

In an embodiment, the first node abstains from sending of the second signaling, and in response to the behavior of abstaining from sending of the second signaling, the value of the first counter is updated by 1.

In an embodiment, it is determined whether the first counter expires, if the first counter expires, and no wireless signal is sent, between a time when the first counter expires and a time domain resource reserved for the second wireless signal, to the sender of the first signaling, then the second wireless signal is sent and the value of the first counter is updated to the initial value; or if the first counter expires, and the wireless signal is sent, between a time when the first counter expires and a time domain resource reserved for the second wireless signal, to the sender of the first signaling, in response to sending, between a time when the first counter expires and a time domain resource reserved for the second wireless signal, the wireless signal to the sender of the first signaling, the second wireless signal is abstained from sending, and the value of the first counter is updated to the initial value.

In an embodiment, the first counter is maintained at the higher layer of the first node, and the sending of the third wireless signal is used to instruct the higher layer of the first node to update the first counter.

Embodiment 7

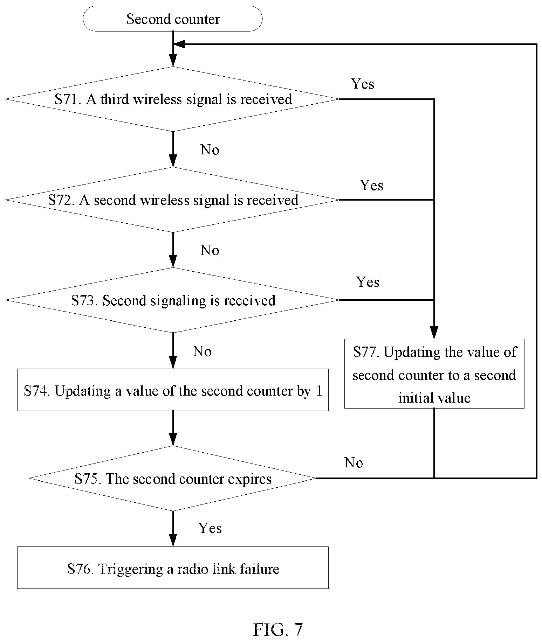

Embodiment 7 illustrates a flowchart of a second counter according to an embodiment of the present application, as shown in FIG. 7. The steps in FIG. 7 are performed at a second node.

In Step S71, it is determined whether a third wireless signal is received, and if yes, Step S77 is performed, and then back to Step S71; otherwise, Step S72 is performed. In Step S72, it is determined whether a second wireless signal is received, and if yes, Step S77 is performed, and then back to Step S71; otherwise, Step S73 is performed. In Step S73, it is determined whether second signaling is received, and if yes, Step S77 is performed, and then back to Step S71; otherwise, Step S74 is performed. In Step S74, a value of the second counter is updated by 1. In Step S75, it is determined whether the second counter expires; and if yes, Step S76 is performed; otherwise back to Step S71. In Step S76, a radio link failure is triggered. In Step S77, the value of second counter is updated to a second initial value.

In an embodiment, the second counter is maintained at the second node.

In an embodiment, the second counter is maintained at a physical layer of the second node.

In an embodiment, the second counter is maintained at a higher layer of the second node.

In an embodiment, the value of the second counter is updated to the second initial value during initialization.

In an embodiment, during initialization of the second counter includes a moment when the second node is powered on.

In an embodiment, during initialization of the second counter includes a moment when an RRC connection is established between the second node and the first node.

In an embodiment, during initialization of the second counter includes a moment when unicast communication is established between the second node and the first node.

In an embodiment, during initialization of the second counter includes a moment when HARQ-enabled unicast communication is established between the second node and the first node.

In an embodiment, during initialization of the second counter includes a moment when the second node sends PC5-RRC information to the first node.

In an embodiment, scheduling signaling is blindly detected, and the scheduling signaling is decoded to obtain a third bit block.

In an embodiment, the third bit block includes an 8-bit source identifier and a 16-bit destination identifier.

In an embodiment, a fourth bit block is obtained by decoding a PSSCH on a time-frequency resource indicated by the third bit block, and the fourth bit block includes a 16-bit source field and an 8-bit destination field.

In an embodiment, that the second node has received the third wireless signal includes that: the 8-bit source identifier included in the third bit block is the same as lower 8 bits of a link layer identifier of the first node, and the 16-bit destination identifier included in the third bit block is the same as lower 16 bits of a link layer identifier of the second node.

In an embodiment, that the second node has received the third wireless signal includes that: the 8-bit source identifier included in the third bit block serves as lower 8 bits and the 16-bit source field included in the fourth bit block serves as upper 16 bits to form a 24-bit source node link layer identifier, and the source node link layer identifier is the same as the 24 bits of the link layer identifier of the first node; and the 16-bit destination identifier included in the third bit block serves as lower 16 bits and the 8-bit destination field included in the fourth bit block serves as upper 8 bits to form a 24-bit destination node link layer identifier, and the destination node link layer identifier is the same as the 24 bits of the link layer identifier of the second node.

In an embodiment, that the second node has not received the third wireless signal includes that: the 8-bit source identifier included in the third bit block is different from the lower 8 bits of the link layer identifier of the first node.

In an embodiment, that the second node has not received the third wireless signal includes that: the 16-bit destination identifier included in the third bit block is different from the lower 16 bits of the link layer identifier of the second node.

In an embodiment, that the second node has not received the third wireless signal includes that: the 8-bit source identifier included in the third bit block serves as lower 8 bits and the 16-bit source field included in the fourth bit block serves as upper 16 bits to form a 24-bit source node link layer identifier, and the source node link layer identifier is different from the 24 bits of the link layer identifier of the first node.

In an embodiment, that the second node has not received the third wireless signal includes that: the 16-bit destination identifier included in the third bit block serves as lower 16 bits and the 8-bit destination field included in the fourth bit block serves as upper 8 bits to form a 24-bit destination node link layer identifier, and the destination node link layer identifier is different from the 24 bits of the link layer identifier of the second node.

In an embodiment, the method for the second node to determine whether the second wireless signal is received is the same as the method for the second node to determine whether the third wireless signal is received, and details are not described herein again.

In an embodiment, the second node sends the first signaling and the first wireless signal, and the first signaling indicates that the second signaling is fed back accroding to a decoding result of the first wireless signal.

In an embodiment, the second node sends the first signaling and the first wireless signal, determines, based on time-frequency resources occupied by the first signaling and the first wireless signal, a time domain resource, a frequency domain resource, and a code domain resource for receiving the second signaling, and receives the second signaling.

In an embodiment, the second node sends the first signaling and the first wireless signal, determines, based on time-frequency resources occupied by the first signaling and the first wireless signal and a high-layer identifier of the first node, a time domain resource, a frequency domain resource, and a code domain resource for receiving the second signaling, and receives the second signaling.

In an embodiment, the high-layer identifier of the first node is allocated by a higher layer.

In an embodiment, the high-layer identifier of the first node is allocated by a V2X layer of the second node.

In an embodiment, the high-layer identifier of the first node is allocated by an application layer of the second node.

In an embodiment, the second node receives the second signaling in a second slot.

In an embodiment, the second slot is the first slot including a PSFCH resource obtained after a first time interval elapses for the last slot in which the first wireless signal is sent.

In an embodiment, the first time interval is configured by a base station.

In an embodiment, the first time interval is preconfigured.

In an embodiment, the first time interval is configured through RRC signaling.

In an embodiment, the first time interval is configured through SL-ConfigDedicatedNR in the RRC signaling.

In an embodiment, the first time interval is configured through MinTimeGapPSFCH parameter in the RRC signaling.

In an embodiment, the first time interval is configured through sl-MinTimeGapPSFCH parameter in the RRC signaling.

In an embodiment, the slot including the PSFCH resource is periodic in the V2X resource pool, a PSFCH resource period may be 1, 2 or 4 sidelink slots, and the PSFCH resource period is configured by a base station or preconfigured.

In an embodiment, the second node receives the second signaling with the first PSFCH resource.

$$[(i + j \cdot N_{PSSCH}^{PSFCH}) \cdot M_{subch,slot}^{PSFCH} \ , \ (i + 1 + j \cdot N_{PSSCH}^{PSFCH}) \cdot \quad M_{subch,slot}^{PSFCH} - 1]$$

In an embodiment, PRBs are allocated, first in ascending order of slot and then in ascending order of frequency domain, as a frequency domain resource of a PSFCH corresponding to a PSSCH transmitted in slot i and sub-channel j, where $0 \leq i \leq N_{PSSCH}^{PSFCH}$, $0 \leq j \leq N_{subch}$. $N_{PSSCH}^{PSFCH}$ is a PSFCH resource period configured in a V2X resource pool, $M_{subch,slot}^{PSFCH} = \lfloor M_{PRB,set}^{PSFCH} / N_{subch} \cdot N_{PSSCH}^{PSFCH} \rfloor$, $M_{PRB,set}^{PSFCH}$ is a number of PRBs for transmitting the PSFCH in the V2X resource pool, and $M_{PRB,set}^{PSFCH}$ is configured by a base station or pre-configured. $N_{subch}$ is a number of sub-channels included in the V2X resource pool, $N_{subch}$ is configured by a base station or pre-configured, and $\lfloor \cdot \rfloor$ represents a floor operation.

In an embodiment, a starting position of a sub-channel occupied by the first wireless signal is used to determine a first PSFCH resource set.

In an embodiment, the starting position of the sub-channel occupied by the first wireless signal and a number of sub-channels occupied by the first wireless signal are used to determine the first PSFCH resource set.

In an embodiment, the first PSFCH resource set includes $M_{subch,slot}^{PSFCH}$ PRBs.

In an embodiment, the first PSFCH resource set includes a number of PRBs which is a product of the number of sub-channels occupied by the first wireless signal and $M_{subch,slot}^{PSFCH}$.

In an embodiment, the first PSFCH resource set includes $R_{PRB,CS}^{PSFCH} = N_{type}^{PSFCH} \cdot M_{subch,slot}^{PSFCH} \cdot N_{CS}^{PSFCH}$ PSFCH resources. When the starting position of the sub-channel occupied by the first wireless signal is used to determine the first PSFCH resource set, $N_{type}^{PSFCH}$ is 1. When the starting position of the sub-channel occupied by the first wireless signal and the number of sub-channels occupied by the first wireless signal are used to determine the first PSFCH resource set, $N_{type}^{PSFCH} = N_{subch}^{PSSCH}$, where $N_{subch}^{PSSCH}$ is the number of sub-channels occupied by the first wireless signal. $N_{CS}^{PSFCH}$ indicates a cyclic shift pair, and $N_{CS}^{PSFCH}$ is configured by a higher layer of a base station or pre-configured. The PSFCH resources are arranged first in ascending order of PRB and then in ascending order of cyclic shift pair.

In an embodiment, the source identifier included in the first signaling is used to determine an index of the first PSFCH resource in the first PSFCH resource set.

In an embodiment, the source identifier included in the first signaling and the high-layer identifier of the first node are used to determine the index of the first PSFCH resource in the first PSFCH resource set.

In an embodiment, the index of the first PSFCH resource in the first PSFCH resource set is $P_{ID} \mod R_{PRB,CS}^{PSFCH}$, where $P_{ID}$ is the source identifier included in the first signaling.

In an embodiment, when a value of a cast type field included in an SCI format 2-A included in the first signaling is 01, the index of the first PSFCH resource in the first PSFCH resource set is $(P_{ID} + M_{ID}) \mod R_{PRB,CS}^{PSFCH}$, where $P_{ID}$ is the source identifier included in the first signaling, and the $M_{ID}$ is the high-layer identifier of the first node.

In an embodiment, the second node determines the PSFCH resource based on the method described in Section 16.3 of 3GPP 38.213 protocol.

In an embodiment, the determining whether the second signaling is received includes: when the second node has received one of ACK or NACK on the first PSFCH resource, indicating that the second signaling is received; when the second node has not received any one of ACK feedback and NACK feedback on the first PSFCH resource, indicating that the second signaling is not received.

In an embodiment, when the second node receives the third wireless signal, the value of the second counter is updated to the second initial value.

In an embodiment, when the second node receives the second wireless signal, the value of the second counter is updated to the second initial value.

In an embodiment, when the second node has received the second signaling, the value of the second counter is updated to the second initial value; when the second node has not received the second signaling, the value of the second counter is updated by 1.

In an embodiment, the updating the value of the second counter to the second initial value includes resetting the second counter.

In an embodiment, the updating the value of the second counter to the second initial value includes: updating the value of the second counter to 0.

In an embodiment, the updating the value of the second counter to the second initial value includes: updating the value of the second counter to a target threshold.

In an embodiment, the updating the value of the second counter by 1 includes incrementing the value of the second counter by 1.

In an embodiment, the updating the value of the second counter by 1 includes subtracting 1 from the value of the second counter.

In an embodiment, the determining whether the second counter expires includes: when the initial value of the second counter is 0, and the behavior of updating the second counter by 1 includes incrementing the value of the second counter by 1; then when the value of the second counter reaches the target threshold, the second counter expires; otherwise, the second counter does not expire.

In an embodiment, the determining whether the second counter expires includes: when the initial value of the second counter is the target threshold, and the behavior of updating the second counter by 1 includes subtracting 1 from the value of the second counter; then when the value of the second counter reaches 0, the second counter expires; otherwise, the second counter does not expire.

In an embodiment, when the second counter expires, the second node triggers a radio link failure in response to the expiration of the second counter.

In an embodiment, the target threshold is pre-configured.

In an embodiment, the target threshold is pre-specified.

In an embodiment, the target threshold is configured through RRC signaling.

In an embodiment, the target threshold is configured by a base station.

In an embodiment, the target threshold is included in all or some of IEs in one piece of RRC signaling.

In an embodiment, the target threshold is included in all or some of fields in an IE in one piece of RRC signaling.

In an embodiment, the target threshold is included in a System Information Block (SIB).

In an embodiment, the target threshold is determined by UE implemention.

In an embodiment, the target threshold is included in an sl-max-HARQ-DTX IE in one piece of RRC signaling.

Embodiment 8

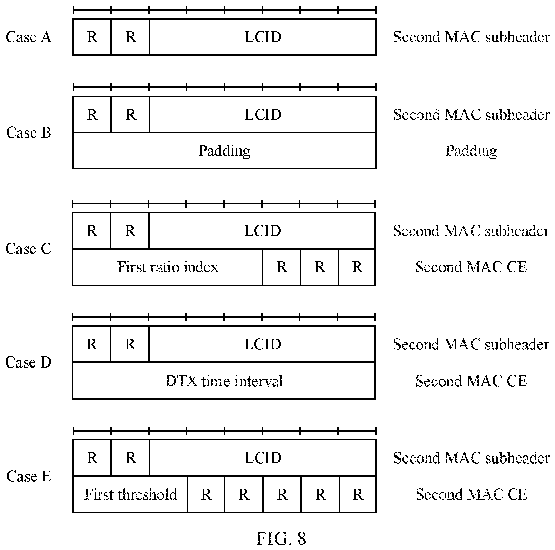

Embodiment 8 illustrates a format diagram of a second MAC subPDU according to an embodiment of the present application, as shown in FIG. 8.

In an embodiment, the second MAC subPDU includes only a second MAC subheader, and a value of an LCID included in the second MAC subheader is a positive integer between 20 and 61.

In an embodiment, the second MAC subPDU includes a second MAC subheader and padding; and a value of an LCID included in the second MAC subheader is 63.

In an embodiment, the padding includes Num bytes; and Num is a positive integer not greater than 1024.

In an embodiment, R bit included in the second MAC subheader indicates a reserved bit, which is set to 0.

In case A of Embodiment 8, the second MAC subheader includes 2 reserved bits and a 6-bit LCID.

In case B of Embodiment 8, the second MAC subheader includes 2 reserved bits and 6-bit LCID; and the padding includes 1 byte.

In an embodiment, the second MAC subPDU includes a second MAC subheader and a second MAC CE, and a value of an LCID included in the second MAC subheader is a positive integer between 20 and 61.

In an embodiment, the second MAC CE indicates a channel quality state of a first channel; and the channel quality state of the first channel includes a first ratio index.

In an embodiment, the second MAC CE indicates a channel quality state of a first channel; and the channel quality state of the first channel includes a DTX time interval.

In an embodiment, the second MAC CE indicates a channel quality state of a first channel; and the channel quality state of the first channel includes a first threshold.

In an embodiment, the second MAC CE includes 1 byte.

In an embodiment, R bit included in the second MAC CE indicates a reserved bit, which is set to 0.

In an embodiment, the first ratio index includes 3 bits.

In an embodiment, the first ratio index includes 4 bits.

In an embodiment, the first ratio index includes 5 bits.

In an embodiment, the first ratio index includes 6 bits.

In an embodiment, the DTX time interval includes 7 bits.

In an embodiment, the DTX time interval includes 8 bits.

In an embodiment, the first threshold includes 2 bits.

In an embodiment, the first threshold includes 3 bits.

In an embodiment, the first threshold includes 4 bits.

In an embodiment, the first threshold includes 5 bits.

In case C of Embodiment 8, the second MAC subheader includes 2 reserved bits and a 6-bit LCID. The second MAC CE includes a first ratio index, and the first ratio index includes 5 bits, with a value between 0 to 31, indicating one of 32 elements in a list R.

In case D of Embodiment 8, the second MAC subheader includes 2 reserved bits and a 6-bit LCID. The second MAC CE includes a DTX time interval, and the DTX time interval includes 8 bits.

In case E of Embodiment 8, the second MAC subheader includes 2 reserved bits and a 6-bit LCID. The second MAC CE includes a first threshold, and the first threshold includes 3 bits.

Embodiment 9

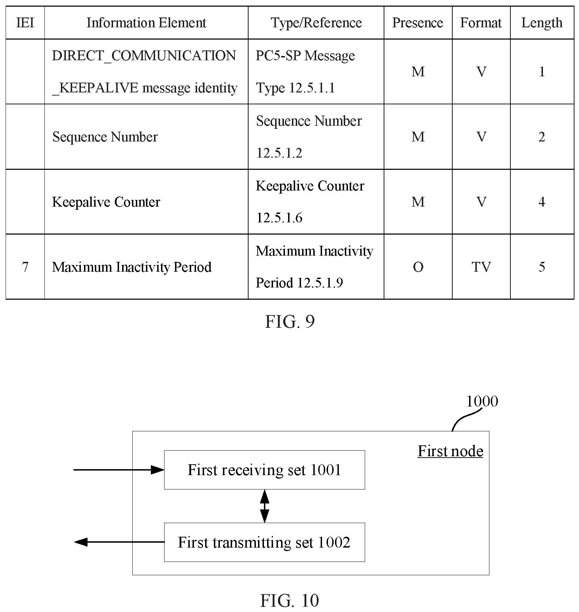

Embodiment 9 illustrates a format diagram of a keepalive message according to an embodiment of the present application, as shown in FIG. 9.

In Embodiment 9, the keepalive message uses a message format described in Table 11.4.5.1.1 in Section 11.4.5 of 3GPP 24.334 protocol. The keepalive message format includes a Direct_Communication_Keepalive message identity, a Sequence Number, a Keepalive Counter, and a Maximum Inactivity Period, which occupy 1 byte, 2 bytes, 4 bytes, and 5 bytes respectively. A message type of the Direct_Communication_Keepalive message identity is described as binary number 00000100 according to Section 12.5.1.1 in 3GPP 24.334 protocol. The Sequence Number is described as a natural number between 0 and 65535 including 0 and 65535 according to Section 12.5.1.2 in 3GPP 24.334 protocol. The Keepalive Counter includes 32 bits according to the description in Section 12.5.1.6 in 3GPP 24.334 protocol. The Maximum Inactivity Period includes 40 bits according to the description in Section 12.5.1.9 in 3GPP 24.334 protocol. Information Element Identifiers (IEIs) of the Keepalive Counter and the Maximum Inactivity Period are 4 and 7, respectively. Presence in the table identified as M indicates that the Direct_Communication_Keepalive message identity, the Sequence Number, and the Keepalive Counter are mandatory in the keepalive message. Presence in the table identified as O indicates that the Maximum Inactivity Period is optional in the keepalive message. Format in the table identified as V indicates that the Direct_Communication_Keepalive message identity, the Sequence Number, and the Keepalive Counter only include values. Format in the table is identified as TV indicates that the Maximum Inactivity Period includes a type and a value.

Embodiment 10

Embodiment 10 illustrates a structural block diagram of a first node processing apparatus according to an embodiment of the present application, as shown in FIG. 10. In FIG. 10, the first node processing apparatus 1000 includes a first receiving set 1001 and a first transmiting set 1002. The first receiving set 1001 includes at least one of the transmitter/receiver 454 (including the antenna 452), the receive processor 456, the multi-antenna receive processor 458, and the controller/processor 459 in FIG. 4 of the present application. The first transmiting set 1002 includes at least one of transmitter/receiver 454 (including the antenna 452), the transmit processor 468, the multi-antenna transmit processor 457, and the controller/processor 459 in FIG. 4 of the present application.

In embodiment 10, the first receiving set 1001 is configured to receive first signaling and a first wireless signal, where the first signaling indicates a first priority. The first transmiting set 1002 is configured to: determine, based on the first priority, whether to send second signaling; when it is determined to send the second signaling, send the second signaling and update a value of a first counter to an initial value; or when it is determined not to send the second signaling, abstain from sending of the second signaling and update the value of the first counter by 1; and when the first counter expires, in response to expiration of the first counter, send a second wireless signal and update the value of the first counter to the initial value. The first signaling includes configuration information of the first wireless signal, and the second signaling is used to indicate whether the first wireless signal is correctly decoded. A target receiver of the second wireless signal is the same as a sender of the first signaling.

In an embodiment, the second wireless signal is sent only when the first node does not send, between a time when the first counter expires and a time domain resource reserved for the second wireless signal, a wireless signal to the sender of the first signaling.

In an embodiment, the first transmiting set 1002 is configured to send a third wireless signal; and in response to the behavior of sending the third wireless signal, update the value of the first counter to the initial value. A target receiver of the third wireless signal is the same as the sender of the first signaling.

In an embodiment, the second wireless signal only includes first scheduling signaling, and the first scheduling signaling indicates an identity of the first node and an identity of the sender of the first signaling.

In an embodiment, the second wireless signal includes a second MAC PDU, the second MAC PDU indicates a channel quality state of a first channel, and the first channel connects the first node and the sender of the first signaling.

In an embodiment, the second wireless signal includes a keepalive message.

In an embodiment, the first transmiting set 1002 is configured to compare the first priority and a second priority; and when the first priority is higher than the second priority, determine to send the second signaling; or when the first priority is lower than the second priority, determine to abstain from sending of the second signaling. The second priority indicates a priority of a fourth wireless signal.

Those of ordinary skill in the art may understand that all or some of the steps in the foregoing method may be completed by instructing relevant hardware through a program, and the program may be stored in a computer-readable storage medium, such as a read-only memory, a hard disk or an optical disk. Optionally, all or some of the steps in the foregoing embodiments may alternatively be implemented by using one or more integrated circuits. Correspondingly, each module unit in the foregoing embodiments may be implemented in a form of hardware, or may be implemented in a form of a software function module, and the present application is not limited to any specific form of combination of software and hardware. A first type of communications nodes or UEs or terminals in the present application includes, but is not limited to, a mobile phone, a tablet computer, a laptop, a network card, a low-power device, an enhanced Machine Type Communication (eMTC) device, an NB-IoT device, an in-vehicle communications device, an aircraft, an airplane, an unmanned air vehicle, a remote control aircraft, and another wireless communications device. A second type of communications nodes or base stations or network side devices in the present application includes, but is not limited to, a macro cell base station, a micro cell base station, a Femtocell, a relay base station, eNB, gNB, a Transmission and Reception Point (TRP), a relay satellite, a satellite base station, an air base station, and another wireless communications device.

The foregoing descriptions are merely preferred embodiments of the present application, rather than limiting the protection scope of the present application. Any modification, equivalent replacement, or improvement made without departing from the principle of the present application shall fall within the protection scope of the present application.

**EP 4 152 664 B1**

**Claims**

1. A first node (1000) used for wireless communication, comprising:

a first receiving set (1001), configured to receive first signaling and a first wireless signal, wherein the first signaling indicates a first priority; and
a first transmiting set (1002), configured to: determine, based on the first priority, whether to send second signaling; when it is determined to send the second signaling, send the second signaling and update a value of a first counter to an initial value; or when it is determined not to send the second signaling, abstain from sending of the second signaling and update the value of the first counter by 1; and when the first counter expires, in response to expiration of the first counter, send a second wireless signal and update the value of the first counter to the initial value, wherein
the first signaling comprises configuration information of the first wireless signal, and the second signaling is used to indicate whether the first wireless signal is correctly decoded; and a target receiver of the second wireless signal is the same as a sender of the first signaling.

2. The first node (1000) according to claim 1, wherein the second wireless signal is sent only when the first node does not send, between a time when the first counter expires and a time domain resource reserved for the second wireless signal, a wireless signal to the sender of the first signaling.

3. The first node (1000) according to claim 1 or 2, comprising:

the first transmiting set (1002), configured to send a third wireless signal; and in response to the behavior of sending the third wireless signal, update the value of the first counter to the initial value, wherein
a target receiver of the third wireless signal is the same as the sender of the first signaling.

4. The first node (1000) according to any one of claims 1 to 3, wherein the second wireless signal comprises only first scheduling signaling, and the first scheduling signaling indicates an identity of the first node and an identity of the sender of the first signaling.

5. The first node (1000) according to any one of claims 1 to 4, wherein the second wireless signal comprises a second MAC PDU, the second MAC PDU indicates a channel quality state of a first channel, wherein
the first channel connects the first node and the sender of the first signaling.

6. The first node (1000) according to any one of claims 1 to 5, wherein the second wireless signal comprises a keepalive message.

7. The first node (1000) according to any one of claims 1 to 6, comprising:

the first transmiting set (1002), configured to: compare the first priority with a second priority; and when the first priority is higher than the second priority, determine to send the second signaling; or when the first priority is lower than the second priority, determine to abstain from sending of the second signaling, wherein
the second priority indicates a priority of a fourth wireless signal.

8. The first node (1000) according to claim 7, wherein the fourth wireless signal is a wireless signal with the highest priority among a plurality of wireless signals waiting to be sent, or the fourth wireless signal is a wireless signal with the highest priority among a plurality of wireless signals waiting to be received.

9. A method for a first node used for wireless communication, comprising:

receiving (101) first signaling and a first wireless signal, wherein the first signaling indicates a first priority; and
determining (102), based on the first priority, whether to send second signaling; when it is determined to send the second signaling, sending the second signaling and updating a value of a first counter to an initial value; or when it is determined not to send the second signaling, abstaining from sending of the second signaling and updating the value of the first counter by 1; and when the first counter expires, in response to expiration of the first counter, sending a second wireless signal and updating the value of the first counter to the initial value, wherein
the first signaling comprises configuration information of the first wireless signal, and the second signaling is used to indicate whether the first wireless signal is correctly decoded; and a target receiver of the second wireless

24

signal is the same as a sender of the first signaling.

10. The method for a first node according to claim 9, wherein the second wireless signal is sent only when the first node does not send, between a time when the first counter expires and a time domain resource reserved for the second wireless signal, a wireless signal to the sender of the first signaling.

11. The method for a first node according to claim 9 or 10, comprising:

sending a third wireless signal; and in response to the behavior of sending the third wireless signal, updating the value of the first counter to the initial value, wherein
a target receiver of the third wireless signal is the same as the sender of the first signaling.

12. The method for a first node according to any one of claims 9 to 11, wherein the second wireless signal comprises only first scheduling signaling, and the first scheduling signaling indicates an identity of the first node and an identity of the sender of the first signaling.

13. The method for a first node according to any one of claims 9 to 12, wherein the second wireless signal comprises a second MAC PDU, the second MAC PDU indicates a channel quality state of a first channel, wherein
the first channel connects the first node and the sender of the first signaling.

14. The method for a first node according to any one of claims 9 to 13, wherein the second wireless signal comprises a keepalive message.

15. The method for a first node according to any one of claims 9 to 14, comprising:

comparing (S53) the first priority with a second priority; and when the first priority is higher than the second priority, determining to send the second signaling or when the first priority is lower than the second priority, determining to abstain from sending of the second signaling, wherein
the second priority indicates a priority of a fourth wireless signal.

**Patentansprüche**

1. Ein erster Knoten (1000), der zur drahtlosen Kommunikation verwendet wird, beinhaltend:

einen ersten Empfänger (1001), der konfiguriert ist, um eine erste Signalgebung und ein erstes drahtloses Signal zu empfangen, wobei die erste Signalgebung eine erste Priorität anzeigt; und
einen ersten Überträger (1002), der konfiguriert ist zum: Bestimmen, basierend auf der ersten Priorität, ob eine zweite Signalgebung gesendet werden soll; wenn bestimmt wird, eine zweite Signalgebung zu senden, Senden der zweiten Signalgebung und Aktualisieren eines Werts eines ersten Zählers auf einen anfänglichen Wert; oder wenn bestimmt wird, die zweite Signalgebung nicht zu senden, Verzichten auf Senden der zweiten Signalgebung und Aktualisieren des Werts des ersten Zählers um 1; und wenn der erste Zähler abläuft, als Antwort auf das Ablaufen des ersten Zählers, Senden eines zweiten drahtlosen Signals und Aktualisieren des Werts des ersten Zählers auf den anfänglichen Wert, wobei
die erste Signalgebung Konfigurationsinformationen des ersten drahtlosen Signals beinhaltet und die zweite Signalgebung verwendet wird, um anzuzeigen, ob das erste drahtlose Signal korrekt dekodiert ist; und ein Zielempfangsgerät des zweiten drahtlosen Signals dasselbe ist wie ein Sender der ersten Signalgebung.

2. Erster Knoten (1000) gemäß Anspruch 1, wobei das zweite drahtlose Signal nur gesendet wird, wenn der erste Knoten, zwischen einer Zeit, wenn der erste Zähler abläuft, und einer Zeitdomänenressource, die für das zweite drahtlose Signal reserviert ist, kein drahtloses Signal an den Sender der ersten Signalgebung sendet.

3. Erster Knoten (1000) gemäß Anspruch 1 oder 2, der Folgendes beinhaltet:
den ersten Überträger (1002), der konfiguriert ist, um ein drittes drahtloses Signal zu senden; und als Antwort auf das Verhalten des Sendens des dritten drahtlosen Signals, Aktualisieren des Werts des ersten Zählers auf den anfänglichen Wert, wobei ein Zielempfangsgerät des dritten drahtlosen Signals dasselbe ist wie der Sender der ersten Signalgebung.

4. Erster Knoten (1000) gemäß einem der Ansprüche 1 bis 3, wobei das zweite drahtlose Signal nur eine erste Zeitplanungssignalgebung beinhaltet und die erste Zeitplanungssignalgebung eine Identität des ersten Knotens und eine Identität des Senders der ersten Signalgebung anzeigt.

5. Erster Knoten (1000) gemäß einem der Ansprüche 1 bis 4, wobei das zweite drahtlose Signal eine zweite MAC PDU beinhaltet, wobei die zweite MAC PDU einen Kanalqualitätszustand eines ersten Kanals anzeigt, wobei der erste Kanal den ersten Knoten und den Sender der ersten Signalgebung verbindet.

6. Erster Knoten (1000) gemäß einem der Ansprüche 1 bis 5, wobei das zweite drahtlose Signal eine Keepalive-Nachricht beinhaltet.

7. Erster Knoten (1000) gemäß einem der Ansprüche 1 bis 6, beinhaltend:

den ersten Überträger (1002), konfiguriert zum: Vergleichen der ersten Priorität mit einer zweiten Priorität; und wenn die erste Priorität höher als die zweite Priorität ist, Bestimmen, die zweite Signalgebung zu senden; oder wenn die erste Priorität niedriger als die zweite Priorität ist, Bestimmen, auf das Senden der zweiten Signalgebung zu verzichten, wobei die zweite Priorität eine Priorität eines vierten drahtlosen Signals anzeigt.

8. Erster Knoten (1000) gemäß Anspruch 7, wobei das vierte drahtlose Signal ein drahtloses Signal mit der höchsten Priorität unter einer Vielzahl von drahtlosen Signalen ist, die auf das Senden warten, oder das vierte drahtlose Signal ein drahtloses Signal mit der höchsten Priorität unter einer Vielzahl von drahtlosen Signalen ist, die auf das Empfangen warten.

9. Ein Verfahren für einen ersten Knoten, der für drahtlose Kommunikation verwendet wird, beinhaltend:

Empfangen (101) einer ersten Signalgebung und eines ersten drahtlosen Signals, wobei die erste Signalgebung eine erste Priorität anzeigt; und
Bestimmen (102), basierend auf der ersten Priorität, ob eine zweite Signalgebung gesendet werden soll; wenn bestimmt wird, eine zweite Signalgebung zu senden, Senden der zweiten Signalgebung und Aktualisieren eines Werts eines ersten Zählers auf einen anfänglichen Wert; oder wenn bestimmt wird, die zweite Signalgebung nicht zu senden, Verzichten auf Senden der zweiten Signalgebung und Aktualisieren des Werts des ersten Zählers um 1; und wenn der erste Zähler abläuft, als Antwort auf das Ablaufen des ersten Zählers, Senden eines zweiten drahtlosen Signals und Aktualisieren des Werts des ersten Zählers auf den anfänglichen Wert, wobei die erste Signalgebung Konfigurationsinformationen des ersten drahtlosen Signals beinhaltet, und die zweite Signalgebung verwendet wird, um anzuzeigen, ob das erste drahtlose Signal korrekt dekodiert ist; und ein Zielempfangsgerät des zweiten drahtlosen Signals dasselbe ist wie ein Sender der ersten Signalgebung.

10. Verfahren für einen ersten Knoten gemäß Anspruch 9, wobei das zweite drahtlose Signal nur gesendet wird, wenn der erste Knoten, zwischen einer Zeit, wenn der erste Zähler abläuft, und einer Zeitdomänenressource, die für das zweite drahtlose Signal reserviert ist, kein drahtloses Signal an den Sender der ersten Signalgebung sendet.

11. Verfahren für einen ersten Knoten gemäß Anspruch 9 oder 10, beinhaltend:

Senden eines dritten drahtlosen Signals; und als Antwort auf das Verhalten des Sendens des dritten drahtlosen Signals, Aktualisieren des Werts des ersten Zählers auf den anfänglichen Wert, wobei ein Zielempfangsgerät des dritten drahtlosen Signals dasselbe ist wie der Sender der ersten Signalgebung.

12. Verfahren für einen ersten Knoten gemäß einem der Ansprüche 9 bis 11, wobei das zweite drahtlose Signal nur eine erste Zeitplanungssignalgebung beinhaltet und die erste Zeitplanungssignalgebung eine Identität des ersten Knotens und eine Identität des Senders der ersten Signalgebung anzeigt.

13. Verfahren für einen ersten Knoten gemäß einem der Ansprüche 9 bis 12, wobei das zweite drahtlose Signal eine zweite MAC PDU beinhaltet, wobei die zweite MAC PDU einen Kanalqualitätszustand eines ersten Kanals anzeigt, wobei der erste Kanal den ersten Knoten und den Sender der ersten Signalgebung verbindet.

14. Verfahren für einen ersten Knoten gemäß einem der Ansprüche 9 bis 13, wobei das zweite drahtlose Signal eine Keepalive-Nachricht beinhaltet.

**15.** Verfahren für einen ersten Knoten gemäß einem der Ansprüche 9 bis 14, beinhaltend:
Vergleichen (S53) der ersten Priorität mit einer zweiten Priorität; und wenn die erste Priorität höher als die zweite Priorität ist, Bestimmen, die zweite Signalgebung zu senden; oder wenn die erste Priorität niedriger als die zweite Priorität ist, Bestimmen, auf das Senden der zweiten Signalgebung zu verzichten, wobei die zweite Priorität eine Priorität eines vierten drahtlosen Signals anzeigt.

**Revendications**

**1.** Un premier noeud (1000) utilisé pour une communication sans fil, comprenant :

un premier ensemble de réception (1001), configuré pour recevoir une première signalisation et un premier signal sans fil, où la première signalisation indique une première priorité ; et
un premier ensemble de transmission (1002), configuré pour : déterminer, sur la base de la première priorité, s'il convient d'envoyer une deuxième signalisation ; lorsqu'il est déterminé qu'il convient d'envoyer la deuxième signalisation, envoyer la deuxième signalisation et mettre à jour une valeur d'un premier compteur sur une valeur initiale ; ou bien lorsqu'il est déterminé qu'il ne convient pas d'envoyer la deuxième signalisation, s'abstenir d'envoyer la deuxième signalisation et mettre à jour la valeur du premier compteur de 1 ; et lorsque le premier compteur expire, en réponse à l'expiration du premier compteur, envoyer un deuxième signal sans fil et mettre à jour la valeur du premier compteur sur la valeur initiale, où
la première signalisation comprend des informations de configuration du premier signal sans fil, et la deuxième signalisation est utilisée pour indiquer si le premier signal sans fil est décodé correctement ; et un récepteur cible du deuxième signal sans fil est le même qu'un envoyeur de la première signalisation.

**2.** Le premier noeud (1000) selon la revendication 1, où le deuxième signal sans fil est envoyé seulement lorsque le premier noeud n'envoie pas, entre un moment où le premier compteur expire et une ressource de domaine temporel réservée pour le deuxième signal sans fil, de signal sans fil à l'envoyeur de la première signalisation.

**3.** Le premier noeud (1000) selon la revendication 1 ou la revendication 2, comprenant :
le premier ensemble de transmission (1002), configuré pour envoyer un troisième signal sans fil ; et en réponse au comportement de l'envoi du troisième signal sans fil, mettre à jour la valeur du premier compteur sur la valeur initiale, où un récepteur cible du troisième signal sans fil est le même que l'envoyeur de la première signalisation.

**4.** Le premier noeud (1000) selon l'une quelconque des revendications 1 à 3, où le deuxième signal sans fil comprend seulement une première signalisation de planification, et la première signalisation de planification indique une identité du premier noeud et une identité de l'envoyeur de la première signalisation.

**5.** Le premier noeud (1000) selon l'une quelconque des revendications 1 à 4, où le deuxième signal sans fil comprend une deuxième PDU MAC, la deuxième PDU MAC indique un état de qualité de canal d'un premier canal, où le premier canal connecte le premier noeud et l'envoyeur de la première signalisation.

**6.** Le premier noeud (1000) selon l'une quelconque des revendications 1 à 5, où le deuxième signal sans fil comprend un message « garder en vie » (*keepalive*).

**7.** Le premier noeud (1000) selon l'une quelconque des revendications 1 à 6, comprenant : le premier ensemble de transmission (1002), configuré pour : comparer la première priorité à une deuxième priorité ; et lorsque la première priorité est plus élevée que la deuxième priorité, déterminer qu'il convient d'envoyer la deuxième signalisation ; ou bien lorsque la première priorité est plus basse que la deuxième priorité, déterminer qu'il convient de s'abstenir d'envoyer la deuxième signalisation, où la deuxième priorité indique une priorité d'un quatrième signal sans fil.

**8.** Le premier noeud (1000) selon la revendication 7, où le quatrième signal sans fil est un signal sans fil avec la priorité la plus élevée parmi une pluralité de signaux sans fil attendant d'être envoyés, ou bien le quatrième signal sans fil est un signal sans fil avec la priorité la plus élevée parmi une pluralité de signaux sans fil attendant d'être reçus.

**9.** Un procédé pour un premier noeud utilisé pour une communication sans fil, comprenant :

la réception (101) d'une première signalisation et d'un premier signal sans fil, où la première signalisation indique une première priorité ; et

la détermination (102), sur la base de la première priorité, de s'il convient d'envoyer une deuxième signalisation ; lorsqu'il est déterminé qu'il convient d'envoyer la deuxième signalisation, l'envoi de la deuxième signalisation et la mise à jour d'une valeur d'un premier compteur sur une valeur initiale ; ou bien lorsqu'il est déterminé qu'il ne convient pas d'envoyer la deuxième signalisation, l'abstention d'envoyer la deuxième signalisation et la mise à jour de la valeur du premier compteur de 1 ; et lorsque le premier compteur expire, en réponse à l'expiration du premier compteur, l'envoi d'un deuxième signal sans fil et la mise à jour de la valeur du premier compteur sur la valeur initiale, où

la première signalisation comprend des informations de configuration du premier signal sans fil, et la deuxième signalisation est utilisée pour indiquer si le premier signal sans fil est décodé correctement ; et un récepteur cible du deuxième signal sans fil est le même qu'un envoyeur de la première signalisation.

10. Le procédé pour un premier noeud selon la revendication 9, où le deuxième signal sans fil est envoyé seulement lorsque le premier noeud n'envoie pas, entre un moment où le premier compteur expire et une ressource de domaine temporel réservée pour le deuxième signal sans fil, de signal sans fil à l'envoyeur de la première signalisation.

11. Le procédé pour un premier noeud selon la revendication 9 ou la revendication 10, comprenant :

l'envoi d'un troisième signal sans fil ; et en réponse au comportement de l'envoi du troisième signal sans fil, la mise à jour de la valeur du premier compteur sur la valeur initiale, où
un récepteur cible du troisième signal sans fil est le même que l'envoyeur de la première signalisation.

12. Le procédé pour un premier noeud selon l'une quelconque des revendications 9 à 11, où le deuxième signal sans fil comprend seulement une première signalisation de planification, et la première signalisation de planification indique une identité du premier noeud et une identité de l'envoyeur de la première signalisation.

13. Le procédé pour un premier noeud selon l'une quelconque des revendications 9 à 12, où le deuxième signal sans fil comprend une deuxième PDU MAC, la deuxième PDU MAC indique un état de qualité de canal d'un premier canal, où le premier canal connecte le premier noeud et l'envoyeur de la première signalisation.

14. Le procédé pour un premier noeud selon l'une quelconque des revendications 9 à 13, où le deuxième signal sans fil comprend un message « garder en vie » (*keepalive*).

15. Le procédé pour un premier noeud selon l'une quelconque des revendications 9 à 14, comprenant :

la comparaison (S53) de la première priorité à une deuxième priorité ; et lorsque la première priorité est plus élevée que la deuxième priorité, la détermination qu'il convient d'envoyer la deuxième signalisation ; ou bien lorsque la première priorité est plus basse que la deuxième priorité, la détermination qu'il convient de s'abstenir d'envoyer la deuxième signalisation, où
la deuxième priorité indique une priorité d'un quatrième signal sans fil.

100

First node

101

Receiving first signaling and a first wireless signal, where the first signaling indicates a first priority

102

Determining, based on the first priority, whether to send second signaling; when it is determined to send the second signaling, sending the second signaling and updating a value of a first counter to an initial value; or when it is determined not to send the second signaling, abstaining from sending of the second signaling and updating the value of the first counter by 1; and when the first counter expires, in response to expiration of the first counter, sending a second wireless signal and updating the value of the first counter to the initial value

FIG. 1

FIG. 2

Control plane
300

| L3 | RRC | 306 |

305

| L2 | PDCP | 304 |
| | RLC | 303 |
| | MAC | 302 |

| L1 | PHY | 301 |

User plane
350

| L2 | SDAP | 356 |
| | PDCP | 354 |
| | RLC | 353 |
| | MAC | 352 |

355

| L1 | PHY | 351 |

FIG. 3

410

416 Transmit processor

471 Multi-antenna transmit processor

418 Transmitter / Receiver

420

452

Transmitter / Receiver 454

457 Multi-antenna transmit processor

450

468 Transmit processor

476 Memory

475 Controller/ processor

477 Data source

420

452

459 Controller/ processor

460 Memory

467 Data source

470 Receive processor

472 Multi-antenna receive processor

418 Transmitter / Receiver

454 Transmitter / Receiver

458 Multi-antenna receive processor

456 Receive processor

FIG. 4

First node

S51. Receiving first signaling and a first wireless signal

S52. Obtaining second signaling by decoding the first wireless signal

S53. A first priority is higher than a second priority

Yes

No

S54. Sending the second signaling, and updating a value of a first counter to an initial value

S55. Abstaining from sending of the second signaling, and updating the value of the first counter by 1

S56. The first counter expires

No

Yes

S57. A wireless signal is sent, between a time when the first counter expires and a time domain resource reserved for a second wireless signal, to a sender of the first signaling

Yes

No

S58. Sending the second wireless signal

S59. Updating the value of the first counter to the initial value

FIG. 5

First counter

S61. A third wireless signal is sent — Yes

No

S62. Second signaling is sent — Yes

No

S63. Updating a value of a first counter by 1

No — S64. The first counter expires

Yes

S65. A wireless signal is sent, between a time when the first counter expires and a time domain resource reserved for a second wireless signal, to a sender of first signaling — Yes

No

S66. Sending the second wireless signal

S67. Updating the value of the first counter to an initial value

FIG. 6

Second counter

S71. A third wireless signal is received — Yes

No

S72. A second wireless signal is received — Yes

No

S73. Second signaling is received — Yes

No

S77. Updating the value of second counter to a second initial value

S74. Updating a value of the second counter by 1

S75. The second counter expires — No

Yes

S76. Triggering a radio link failure

FIG. 7

FIG. 8

| IEI | Information Element | Type/Reference | Presence | Format | Length |
|---|---|---|---|---|---|
| | DIRECT_COMMUNICATION _KEEPALIVE message identity | PC5-SP Message Type 12.5.1.1 | M | V | 1 |
| | Sequence Number | Sequence Number 12.5.1.2 | M | V | 2 |
| | Keepalive Counter | Keepalive Counter 12.5.1.6 | M | V | 4 |
| 7 | Maximum Inactivity Period | Maximum Inactivity Period 12.5.1.9 | O | TV | 5 |

FIG. 9

1000

First node

First receiving set 1001

First transmitting set 1002

FIG. 10

**EP 4 152 664 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200169907 A1